(19) Europäisches Patentamt
European Patent Office
Office européen des brevets

(11) EP 4 729 888 A1

(12) **EUROPEAN PATENT APPLICATION**

(43) Date of publication:
22.04.2026 Bulletin 2026/17

(21) Application number: 25208966.9

(22) Date of filing: 15.10.2025

(51) International Patent Classification (IPC):
*G01C 21/34* (2006.01)

(52) Cooperative Patent Classification (CPC):
**G01C 21/3492; G01C 21/3446; G01C 21/3461; G01C 21/3484**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 17.10.2024 US 202418918356

(71) Applicant: **Microsoft Technology Licensing, LLC Redmond, WA 98052-6399 (US)**

(72) Inventors:
• ZHANG, Chiqun
  Redmond, 98052-6399 (US)
• YANKOV, Dragomir Dimitrov
  Redmond, 98052-6399 (US)
• HUNG, Kuo-Han
  Redmond, 98052-6399 (US)

(74) Representative: **Murgitroyd & Company 165-169 Scotland Street Glasgow G5 8PL (GB)**

(54) **CUSTOMIZABLE NAVIGATION ROUTE GENERATION**

(57) Various embodiments discussed herein relate to generating a customizable route along a road network. Some embodiments generate a representation of a road network that includes locations and connections between those locations. Some embodiments generate a frequency-based lookup table that includes probabilities that a particular route can be selected from possible routes from one location to another. In response to receiving a request to generate a route, some embodiments select a location in the road network and, using the frequency-based lookup table, generate a route to another location in the road network. The route to the other location is then presented using a map interface.

FIG. 1

EP 4 729 888 A1

**Description**

**BACKGROUND**

Digital map services and applications have revolutionized the way individuals navigate, explore, and interact with geographical information. These mapping technologies offer a comprehensive suite of features designed to facilitate seamless navigation, location search, and exploration. For example, some of these mapping technologies allow users to access various map views, including satellite imagery and 360-degree street-level panoramas, thereby enabling an immersive exploration of locations. In another example, some of these mapping technologies also compute detailed directions for multiple modes of transportation, real-time traffic updates, and integration with public transit systems, empowering users to plan and optimize their routes efficiently.

**SUMMARY**

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

Various embodiments described herein relate to a customizable routing system that uses a probabilistic model of a road network having functionality to support various user preferences and queries, is flexible in that it can support route customization, is efficient in that it reduces the search space, and is adaptable in that it can interpolate missing data from the road network without requiring additional training.

Embodiments of the present disclosure are directed towards technologies for generating customizable routes between points of a road or path network using historical route information (for example, recommended routes and/or taken routes). In some implementations, a route is based on the topology of the road network and the existence of routes between a source location and a destination location. In some implementations, a route is based on user preferences and constraints. In some implementations, a route is expressed as a route request from point "A" to point "B" with preferences for how that route is selected.

In various implementations, a route request comprises a request to go from one point to another point (for example, "generate a route from Seattle to Redmond"). Such a route request, with no preferences or constraints, can cause any suitable route to be generated. In some aspects, a route request with no preferences or constraints can cause a route with default preferences (for example, a shortest route or a fastest route) to be selected from a plurality of suitable routes. Embodiments of the present disclosure are directed towards technologies for generating customizable routes with stated preferences so that, for example, a request to "generate a route from Seattle to Redmond, avoiding traffic lights" can cause a customized route from Seattle to Redmond that minimizes intersections with traffic lights to be generated.

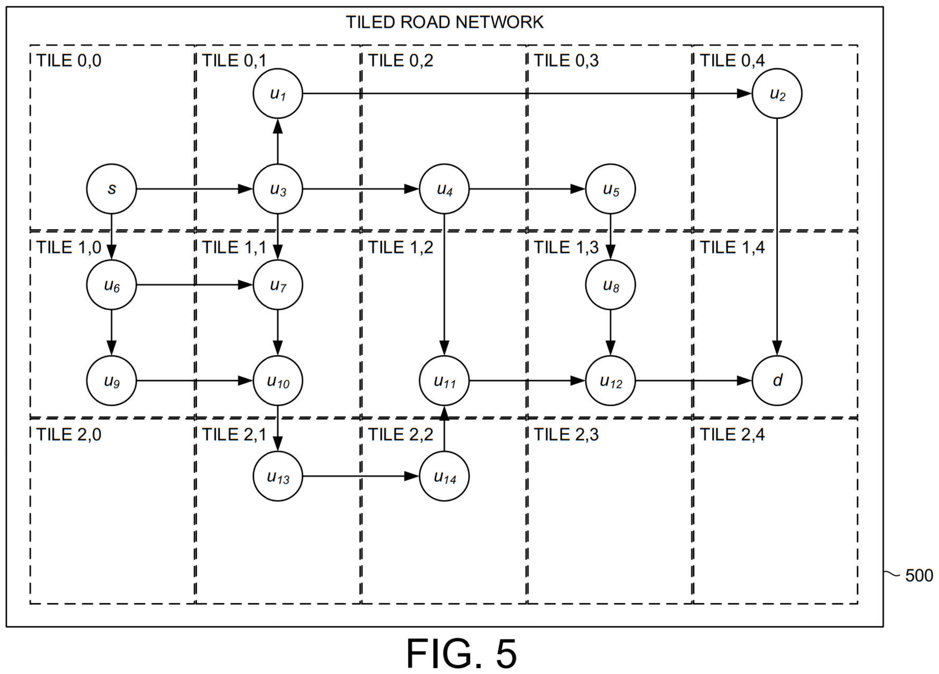

In various implementations, a road network can be represented as a graph, where nodes of the graph represent intersections or other points of the road network and edges of the graph represent routes between those nodes. In various implementations, past routes (either recommended or taken) can be collected and used to generate a frequency table of routes taken or recommended, as described herein. In some embodiments, a road network can be tiled (such as described herein at least in connection with FIG. 5) so that a region is divided into tiles that each contain a subset of the region. As described below, in connection with FIG. 5, one example of dividing a region into tiles that each contain a subset of the region is to tile the region using a grid, which each tile of the grid contains a sub-region and the tiles are non-overlapping. The example described in connection with FIG. 5 uses a rectangular grid, but other grid shapes (for example, squares, hexagons, etc.) can be used as well as non-uniform tile shapes. In an embodiment, the grid of tiles covers the entire region (for example, no part of the region is not contained in one of the tiles). In an embodiment, portions of the regions (for example, areas with no roads) do not have an associated tile. Then the tiled road network can be used when gathering past route information so that a route is generated from a location in one tile to a location in another tile.

In some embodiments, properties of nodes or tiles (for example, traffic lights, road safety, etc.) can be expressed as node probabilities, and properties of edges (for example, speed, length, current traffic conditions, etc.) can be expressed as edge probabilities. In some embodiments, these probabilities can be used to select customizable routes, as described herein. In some embodiments, properties of road network can be updated periodically when, for example, traffic conditions change by updating node and edge probabilities. As such, a road network can be updated without regenerating the entire network. In some embodiments, user preferences can use these node properties and/or edge properties by imposing a penalty function (for example, for a preference to "avoid") or the inverse of a penalty function (for example, for a preference to "prefer") to either discourage or encourage the selection of certain nodes and edges when generating a customizable route between two points.

In this way, embodiments described herein improve the functionality of generating routes from one point to another by computing applications accessible on user computing devices. In particular, the disclosed technology provides a solution to improve the flexibility, adaptability, and efficiency of a customizable routing system. For example, the disclosed technology provides a solution to improve the flexibility and adaptability of a customizable routing system by enabling updates to a customized route as conditions change. In another example, the disclosed technology provides a solution to improve the efficiency of a customizable routing system by reducing the solution search space, thereby more efficiently using computational resources.

**BRIEF DESCRIPTION OF THE DRAWINGS**

Aspects of the disclosure are described in detail below with reference to the attached drawing figures, wherein:

FIG. 1 is a block diagram illustrating components of a customizable routing system, in accordance with embodiments of the present disclosure;

FIG. 2 is a block diagram illustrating components of a mapping system that uses a customizable routing system, in accordance with embodiments of the present disclosure;

FIG. 3 illustrates an example road network, in accordance with embodiments of the present disclosure;

FIG. 4 illustrates an example road network with node and edge probabilities, in accordance with embodiments of the present disclosure;

FIG. 5 illustrates an example tiling of a road network, in accordance with embodiments of the present disclosure;

FIG. 6 illustrates an example of a tiled road network, in accordance with embodiments of the present disclosure;

FIG. 7 is a flow diagram of a process for generating a frequency table for a customizable routing system, in accordance with embodiments of the present disclosure;

FIG. 8 is a flow diagram of a process for generating a route using a customizable routing system, in accordance with embodiments of the present disclosure;

FIG. 9 is a block diagram illustrating an example operating environment suitable for implementing some embodiments of the disclosure; and

FIG. 10 illustrates an example computing device suitable for use in implementing some embodiments of the disclosure described herein.

DETAILED DESCRIPTION

The subject matter of aspects of the present disclosure is described with specificity herein to meet statutory requirements. However, the description itself is not intended to limit the scope of this patent. Rather, it is contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described. Each method described herein may comprise a computing process that may be performed using any combination of hardware, firmware, and/or software. For instance, various functions may be carried out by a processor executing instructions stored in memory. The methods may also be embodied as computer-usable instructions stored on computer storage media. The methods may be provided by a stand-alone application, a service or hosted service (stand-alone or in combination with another hosted service), or a plug-in to another product, to name a few.

Embodiments of the present disclosure are directed towards technologies for generating customizable routes between points of a road or path network using historical route information (for example, recommended routes and/or taken routes). In some implementations, a route is based on the topology of the road network and the existence of routes between a source location and a destination location. In some implementations, a route is based on user preferences and constraints. In some implementations, a route is expressed as a route request from point "A" to point "B" with preferences for how that route is selected.

As described above, mapping technologies offer a comprehensive suite of features designed to facilitate seamless navigation, location search, and exploration. However, existing map search engines of these mapping technologies are designed as semi-structured information retrieval systems. Accordingly, these systems are configured to process input queries with a limited set of preferences (for example, a shortest route, a fastest route, etc.) and configured to process input queries containing only short snippets of text (for example, user source location and desired destination) and a viewport (for example, a portion of a map that is currently visible or displayed on the screen of a device). Map search engines enable users to find specific locations, addresses, businesses, landmarks, and/or or points of interest on the map. In an illustrative example, a map search engine field may receive a user query indicative of a destination address the user desires to visit. The mapping service may then calculate the user's location and multiple routes based on current traffic conditions, distance, and estimated travel time. It may then display the different route options on a map, along with the estimated time it will take to reach the destination via each route. Once a route is selected, the mapping service may then provide vehicle turn-by-turn navigation instructions, including which roads to take, when to turn, and any potential obstacles or delays along the way.

In various implementations, a route request comprises a request to go from one point to another point (for example, "generate a route from Seattle to Redmond"). Such a route request, with no preferences or constraints, can cause any suitable route to be generated. In some aspects, a route request with no preferences or constraints can cause a route with default preferences (for example, a shortest route or a fastest route) to be selected from a plurality of suitable routes.

In various implementations, a route request comprises a request to go from one point to another point with preferences (for example, "generate a route from Seattle to Redmond, avoiding traffic lights"). Such a route request can cause route from Seattle to Redmond that minimizes intersections with traffic lights to be generated. In some aspects, default preferences or constraints (for example, a shortest route or a fastest route) can be used to generate the route. In various implementations, a user can specify preferences (for example, "avoiding traffic lights") to generate a customizable route.

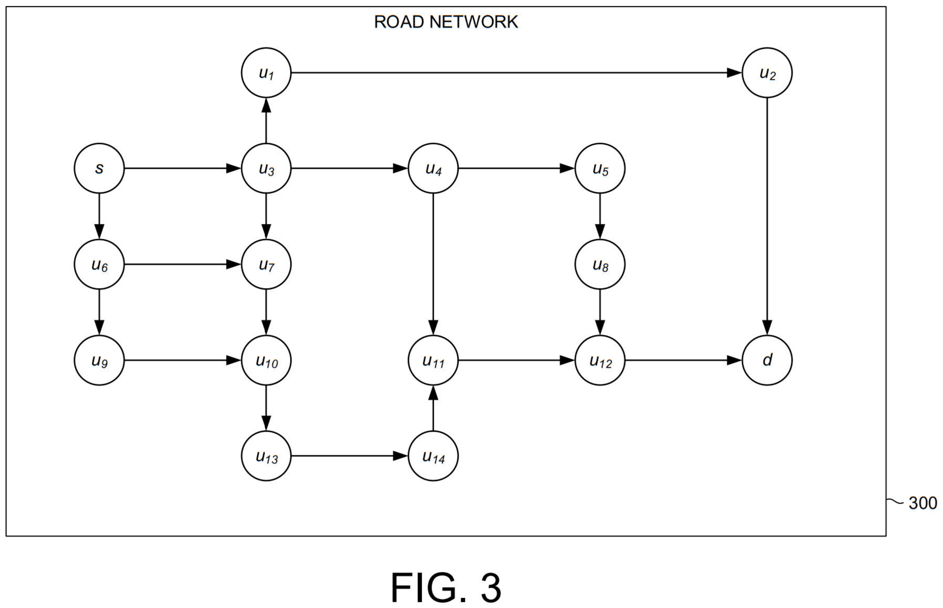

In various implementations, a road network can be represented as a graph, where nodes of the graph represent intersections or other points of the road network and edges of the graph represent routes between those nodes, as described below in connection with FIG. 3. It should be noted that, in an example, as used herein, a "road network" can refer to any navigable or mapable terrain. For example, a network of mountain paths can be considered as a type of road network where path intersections and branch points are represented by nodes of the graph and paths between those nodes are edges of the graph. Similarly, a network of waterways can be considered as a type of road network where waterway junctions are represented by nodes of the graph and waterways between those junctions are edges of the graph. It should also be noted that, while the examples described herein are all two-dimensional (2D), the technological solutions described herein can be generalized to three-dimensional (3D) or higher dimensional terrain with appropriately defined graphs.

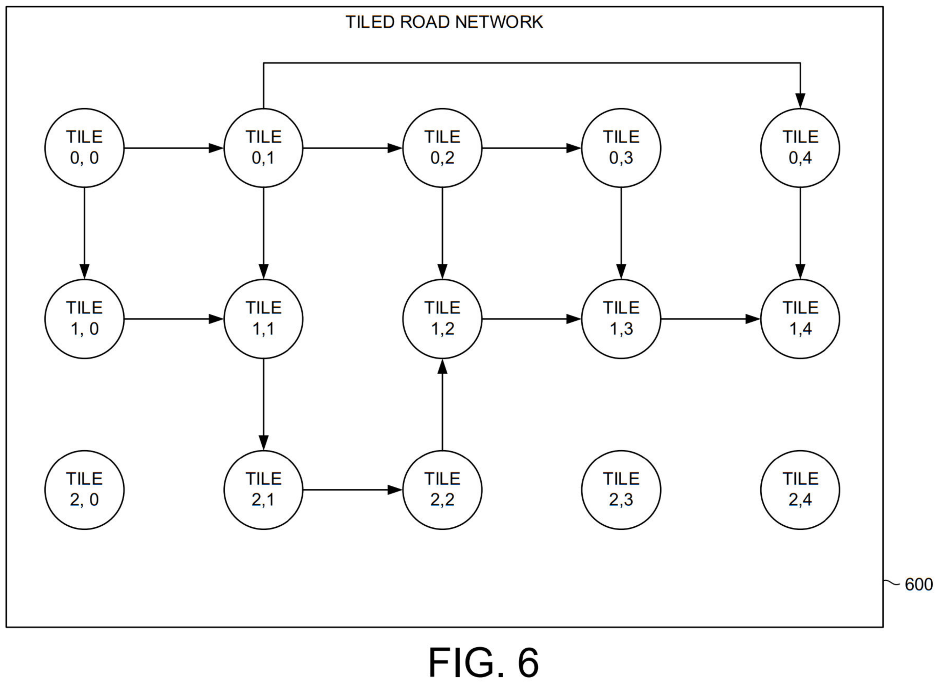

In various implementations, past routes (either recommended or taken) can be collected and used to generate a frequency table of routes taken or recommended. For example, a route from one point to another point can be requested and, due to traffic and/or other consideration, one of several routes can be recommended. Based on the recommendation, that route may be taken (for example, by a driver) or may be deviated from (for example, the route taken and the route recommended may be different). In some embodiments, the route recommendation and/or the taken route can be recorded and used to build a frequency-based lookup table that is conditioned on edges and nodes of the graph, as described herein at least in connection with FIG. 6.

In some embodiments, a road network can be tiled (for example, as described herein at least in connection with FIG. 5). A tiled road network divides a region (for example, the region of the road network) into tiles that each contain a subset of the region. In some embodiments, a region can be tiled into m-by-n tiles so, for example, a region can be tiled using a 32x32 tile grid, yielding 1024 tiles that span the region. Such a tiled road network can be used when gathering past route information so that, a route from a location in one tile to a location in another tile is recorded in a frequency-based lookup table that is conditioned on the tiles and the edges. In some embodiments, the frequency-based lookup table is used for navigation between tiles (for example, out-tile navigation) and a different navigational algorithm (for example, A*, also referred to herein as "Astar", which is also referred to as a "route-finding algorithm" or "pathfinding algorithm") is used for navigation within a tile (for example, in-tile navigation). In some embodiments, a frequency-based lookup table is used for both in-tile and out-tile navigation. In some embodiments, one frequency-based lookup table is used for out-tile navigation and a different frequency-based lookup table is used for in-tile navigation.

In some embodiments, properties of nodes (for example, traffic lights, road safety, etc.) can be expressed as node probabilities (for example, as described herein at least in connection with FIGS. 3-6) and used to select routes. In some embodiments, properties of tiles (for example, a proportion of traffic lights, etc.) can be expressed as node probabilities. In some embodiments, properties of edges (for example, speed, length, current traffic conditions, etc.) can be expressed as edge probabilities (for example, also as described herein at least in connection with FIGS. 3-6) and used to select routes. In some embodiments, properties of edges between tiles (for example, routes between tiles) can be expressed as edge properties. In some embodiments, properties of road network can be updated periodically when, for example, traffic conditions change by updating node and edge probabilities. As such, a road network can be updated without regenerating the entire network.

In some embodiments, user preferences, such as preferences to drive on major interstates, highways, and freeways, preferences to avoid driving on two-lane roads, preferences to avoid traffic lights, preferences for a shortest route, preferences for a fastest route, etc., can be used to select routes. Information to satisfy such preferences can be extracted from one or more data sources (for example, previous conversations, chats, emails, texts, social media threads, databases, geographical information systems, etc.). Other user preferences may include not driving on dirt roads, preferences to drive on "scenic" routes, and the like. In some embodiments, user preferences can use node properties and/or edge properties by imposing a penalty function (for example, for a preference to "avoid") or the inverse of a penalty function (for example, for a preference to "prefer") to either discourage or encourage the selection of certain nodes and edges when generating a route between two points.

## Overview of Technical Problems, Technical Solutions, and Technological Improvements

As described previously, map search engines use mapping technologies that are designed using semi-structured information retrieval systems. Accordingly, these systems are configured to process input queries with a limited set of preferences (for example, a shortest route, a fastest route, etc.) but not configured to offer a wider variety of route preferences such as those described herein. This is because many map search engines enable users to find specific locations, addresses, businesses, landmarks, and/or or points of interest on the map but not configured to select routes that, for example, avoid traffic lights, avoid freeways, prefer freeways, etc. In an illustrative example, a map search engine field may receive a user query indicative of a destination address the user desires to visit. The mapping service may then calculate the user's location and multiple routes based on current traffic conditions, distance, and estimated travel time. However, the mapping service may not be able to calculate routes based on a user's preferences.

There are several technical problems with generating a route map using a customizable routing system. The first technical problem is that a search for routes that, for example, avoid traffic lights (for example, a property of an intersection) does not necessarily inform a different search for routes that are faster or shorter. Accordingly, there can be considerable latency or delay when performing said searches. Since a road network is frequently updated with changing traffic conditions (for example, a fastest route from Redmond to Seattle at 5:00 PM may be very different than a fastest route from Redmond to Seattle at 9:00 PM) this latency and recomputation can make using a customizable routing system prohibitive.

Another technical problem is that, with even a small number of nodes and edges, an exhaustive search for an optimal route (for example, each time preferences or road conditions change) can require searching a very large search space. For example, even a simple 10x10 grid of nodes, with routes between each pair of nodes yields a very large search space that can quickly become computationally intractable.

Another technical problem is that a mapping service may not have any data for a location (for example, an intersection) or a road (for example, a route between two intersections) when, for example, the intersection is new or the road has not been used by any user of the mapping service before. This lack of data can make a mapping service completely avoid that intersection or road since, because of that missing data, the mapping service does not consider that as a possible route.

Embodiments of this disclosure provide technical solutions that have technical effects in light of these technical problems. Specifically, various embodiments relate to a customizable routing system that uses a probabilistic model of a road network that is able to support various preferences and queries that is flexible in that it can support route customization, is efficient in that it reduces the search space, and is adaptable in that it can interpolate missing data from the road network without additional training.

Embodiments of the present disclosure are directed towards technologies for generating customizable routes between points of a road or path network using historical route information (for example, recommended routes and/or taken routes). In some implementations, a route is based on the topology of the road network and the existence of routes between a source location and a destination location. In some implementations, a route is based on user preferences and constraints. In some implementations, a route is expressed as a route request from point "A" to point "B" with preferences for how that route is selected, as described above.

In various implementations, a road network can be represented as a graph, where nodes of the graph represent intersections or other points of the road network and edges of the graph represent routes between those nodes. In various implementations, past routes (either recommended or taken) can be collected and used to generate a frequency table of routes taken or recommended, as described herein. In some embodiments, a road network can be tiled (for example, as described herein at least in connection with FIG. 5) so that a region is divided into tiles that each contain a subset of the region and the tiled road network can be used when gathering past route information so that a route is from a location in one tile to a location in another tile.

In some embodiments, properties of nodes or tiles (for example, traffic lights, road safety, etc.) can be expressed as node probabilities and properties of edges (for example, speed, length, current traffic conditions, etc.) can be expressed as edge probabilities. In some embodiments, these probabilities can be used to select customizable routes, as described herein. In some embodiments, properties of road network can be updated periodically when, for example, traffic conditions change by updating node and edge probabilities. As such, a road network can be updated without regenerating the entire network. In some embodiments, user preferences can use these node properties and/or edge properties by imposing a penalty function (for example, for a preference to "avoid") or the inverse of a penalty function (for example, for a preference to "prefer") to either discourage or encourage the selection of certain nodes and edges when generating a customizable route between two points.

Various embodiments of the customizable route mapping technology described herein have the technical effect of improving the flexibility, efficiency, and adaptability of customizable route generation. By performing customizable route generation using a probabilistic model based on historical route information (for example, routes previously recommended and/or taken), the flexibility of a mapping system is improved. In some embodiments, the probabilistic model is based on the frequency that past routes were recommended by a mapping service or taken by a user of the mapping service. In some embodiments, using this probabilistic model enables a user to select a customizable route without regenerating the entire network based on new preferences by applying penalty functions to properties of nodes and edges based on those preferences. This probabilistic model can reduce the search space of possible solutions by, for example, performing searches on routes with higher probability of success. In some embodiments, this probabilistic model can improve the flexibility, efficiency, and adaptability of a search that uses a reduced search space by avoiding an exhaustive search of all possible routes. This reduced search space can be both quicker and more efficient, requiring less computational resources to generate a customizable route. Thus, this probabilistic model can be considerably more efficient than an exhaustive search, thereby reducing latency without sacrificing flexibility.

Additionally, by performing customizable route generation using a probabilistic model based on historical route information, the efficiency of a mapping system is improved. In some embodiments, using this probabilistic model that is based on the frequency of past routes considerably reduces the search space for customizable routing since an exhaustive search of the entire road network is not needed. Instead, a route from a current node to the destination can be selected based on the node and edge probabilities. The reduced search space reduces computational time and space requirements and more efficiently uses computing resources. Additionally, updating this probabilistic model (for example, when conditions change) is considerably faster since the update can be performed by updating the node and edge probabilities. Again, using this probabilistic model and updating this probabilistic model can use fewer computational resources to generate a customizable route, thereby improving the efficiency of computational systems used for customizable route generation and, in some aspects, providing a more optimal use of computational resources.

Additionally, by performing customizable route generation using a probabilistic model based on historical route information, the adaptability of a mapping system is improved. In some embodiments, when a mapping service does not have information about a road or an intersection, the mapping service would not recommend that road or intersection and thus, would be even less likely to recommend that road or intersection in the future. However, techniques described herein use message passing between nodes of the road network to interpolate information from known nodes and edges to unknown nodes and edges. This message passing is an adaptation that causes missing data in a probabilistic model to be added to the model, thereby enabling route customization, as described herein. This message passing can also serve as an error check on probabilities of the probabilistic model, causing possibly erroneous data to be verified and updated (for example, data about the properties of intersections and roads).

## Additional Description of the Embodiments

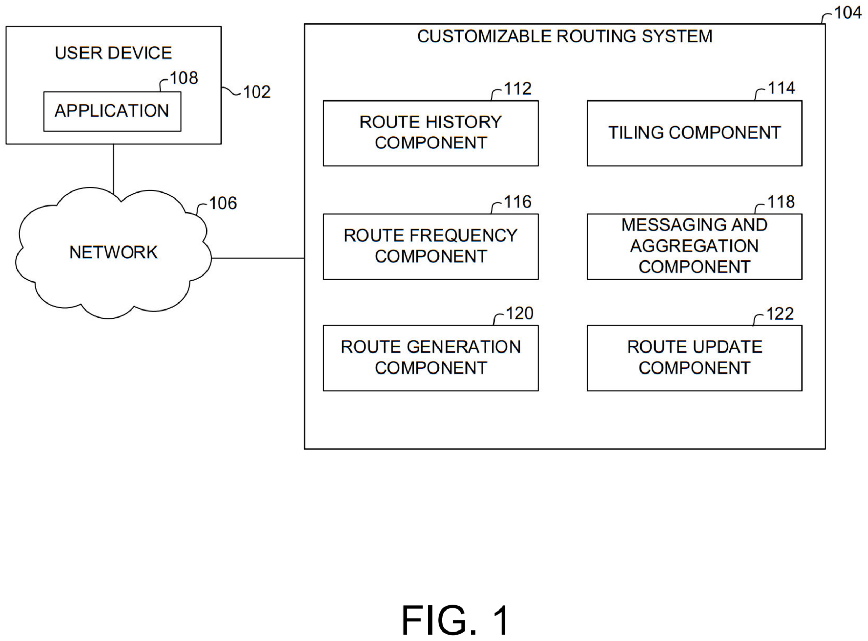

Turning now to the figures, FIG. 1 is a block diagram 100 illustrating components of a customizable routing system, in accordance with embodiments of the present disclosure. It should be understood that this and other arrangements described herein are set forth only as examples. Other arrangements and elements (for example, machines, interfaces, functions, orders, and groupings of functions) can be used in addition to or instead of those shown, and some elements can be omitted altogether for the sake of clarity. Further, many of the elements described herein are functional entities that are implemented as discrete or distributed components or in conjunction with other components, and in any suitable combination and location. Various functions described herein as being performed by one or more entities are carried out by hardware, firmware, and/or software. For instance, some functions are carried out by a processor executing instructions stored in memory.

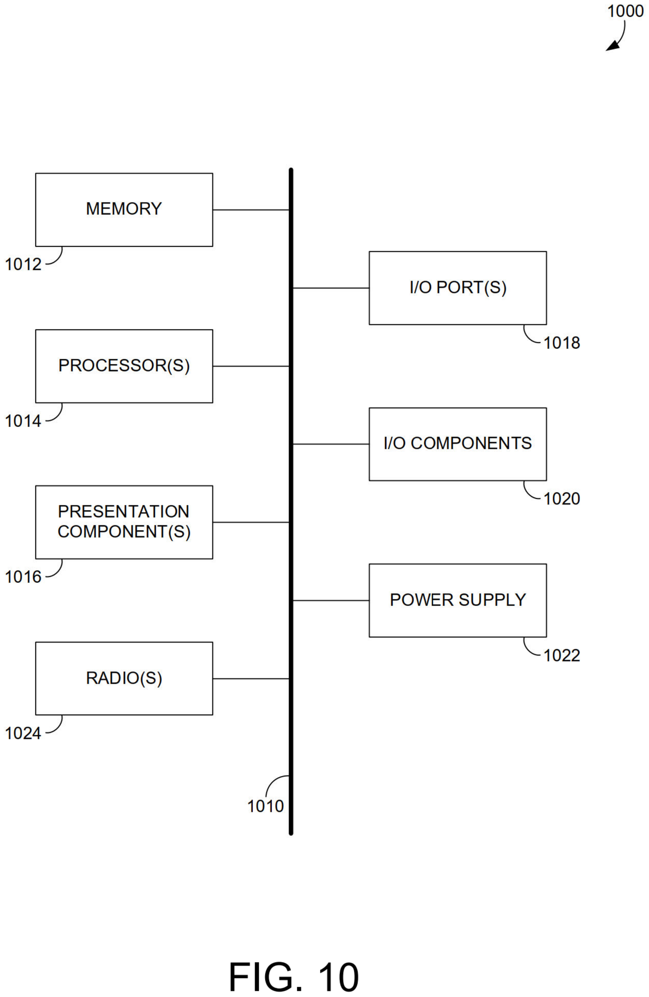

The system illustrated in block diagram 100 is an example of a suitable architecture for implementing certain aspects of the present disclosure. Among other components not shown, the system illustrated in block diagram 100 includes a user device 102 and a customizable routing system 104. Each of the user device 102 and the customizable routing system 104 shown in FIG. 1 can comprise one or more computer devices, such as the computing device 1000 of FIG. 10, described below. As shown in FIG. 1, the user device 102 and the customizable routing system 104 can communicate via a network 106, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system illustrated in block diagram 100 within the scope of the present technology. Each device or server may comprise a single device or multiple devices cooperating in a distributed environment. For instance, the customizable routing system 104 could be provided by multiple server devices collectively providing the functionality of the customizable routing system 104, as described herein. Additionally, other components not shown may also be included within the network environment.

The user device 102 can be a client device on the client-side of the operating environment illustrated in block diagram 100, while the customizable routing system 104 can be on the server-side of the operating environment illustrated in block diagram 100. The customizable routing system 104 can comprise server-side software designed to work in conjunction with client-side software on the user device 102 so as to implement any combination of the features and functionalities discussed in the present disclosure. For example, the user device 102 can include an application 108 for interacting with the customizable routing system 104. The application 108 can be, for instance, a web browser or a dedicated application for providing functions, such as those described herein. This division of an operating environment illustrated in block diagram 100 is provided to illustrate one example of a suitable environment. There is no requirement for each implementation that any combination of the user device 102 and the customizable routing system 104 remain as separate entities. While the operating environment illustrated in block diagram 100 illustrates a configuration in a networked environment with a separate user device 102 and customizable routing system 104, it should be understood that other configurations can be employed in which aspects of the various components are combined. For instance, in some instances, aspects of the customizable routing system 104 can be implemented in part or in whole by the user device 102.

In some configurations, the application 108 can comprise a user interface (not shown in FIG. 1). In some configurations, the user interface provides one or more user interfaces to a user of a device, such as the user device 102 for interacting with the customizable routing system 104. In some instances, the user interface can be presented on the user device 102 via the application 108, which can be a web browser or a dedicated application for interacting with the customizable routing system 104. For instance, the user interface can provide user interfaces for, among other things, receiving input from a user and providing responses to the user. In some embodiments, the customizable routing system 104 further includes a user interface component (not shown in FIG. 1) that provides one or more user interfaces for interacting with the customizable routing system 104. In some aspects, a user interface component provides one or more user interfaces to a user device, such as the user device 102 via the application 108.

The user device 102 may comprise any type of computing device capable of use by a user. For example, in one aspect, a user device may be the type of computing device 1000 described in relation to FIG. 10 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device. A user may be associated with the user device 102 and may interact with the customizable routing system 104 via the user device 102.

In some configurations, portions of the customizable routing system 104 are implemented using artificial intelligence ("AI") models that generate responses to user queries through natural language interaction. In such instances, the customizable routing system 104 uses artificial intelligence and machine learning algorithms to understand user queries, interpret context, and generate responses by accessing relevant information from various sources. In at least one embodiment, the customizable routing system 104 uses generative models such as those described herein to understand user queries, interpret context, and generate automatically cropped images using systems, methods, operations, and techniques such as those described herein.

As shown in FIG. 1, the customizable routing system 104 comprises a route history component 112, a tiling component 114, a route-frequency component 116, a messaging and aggregation component 118, a route generation component 120, and/or a route update component 122. The modules/components of the customizable routing system 104 may be in addition to other components that provide further additional functions beyond the features described herein. The customizable routing system 104 can be implemented using one or more server devices, one or more platforms with corresponding application programming interfaces, cloud infrastructure, and the like. While the customizable routing system 104 is shown as separate from the user device 102 in the configuration of FIG. 1, it should be understood that in other configurations, some or all of the functions of the customizable routing system 104 can be provided on the user device 102. Additionally, in some configurations, one or more of the components of the customizable routing system 104 shown in FIG. 1 can be provided by the user device 102 and/or another device in another location not shown in FIG. 1. In some configurations, the components of the customizable routing system 104 can be provided by a single entity or by multiple entities.

In some aspects, the functions performed by components of the customizable routing system 104 are associated with one or more applications, services, or routines. In particular, such applications, services, or routines may operate on one or more user devices and servers, may be distributed across one or more user devices and servers, or may be implemented in the cloud. Moreover, in some aspects, these components of the customizable routing system 104 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

**EP 4 729 888 A1**

Additionally, although functionality is described herein with regards to specific components shown in the example system illustrated in block diagram 100, it is contemplated that in some aspects, functionality of these components can be shared or distributed across other components.

In some embodiments, the customizable routing system 104 uses the route history component 112 to gather route history data using routes recommended (for example, by a mapping system) and routes taken (for example, by a user). In some embodiments, the customizable routing system 104 uses the route history component 112 in response to a query from the user device 102 to recommend a route. In some embodiments, the customizable routing system 104 uses the route history component 112 to gather route history data automatically (for example, not in response to a request from the user device 102). In some embodiments, the route history component 112 gathers route history data using systems and methods described herein. In some embodiments, the route history data is used by the route frequency component 116 to generate the frequency-based lookup table, as described herein.

In some embodiments, the customizable routing system 104 uses the tiling component 114 to generate a tiling (for example, a subdivision) of a region to be used for route mapping. In some embodiments, the customizable routing system 104 uses the tiling component 114 to generate a tiling of a region based on one or more parameters such as, for example, a number of tiles or a size of tiles. In some embodiments, the tiling component 114 generates a single tiling of a region. In some embodiments, the tiling component 114 generates a plurality of tilings of a region (for example, of different sizes or resolutions). In some embodiments, the tiling component 114 generates a multiresolution tiling of a region (for example, with different resolutions at different locations within the region. In some embodiments, the tiling component 114 generates the tiling using systems and methods described herein at least in connection with FIG. 5. In some embodiments, the tiling of the region is by the route frequency component 116 to generate the frequency-based lookup table that is based on the tiling, as described herein.

In some embodiments, the customizable routing system 104 uses the route frequency component 116 to generate a frequency-based lookup table that includes frequencies and normalized probabilities of nodes and edges of a region (for example, where nodes represent tiles of a region that are generated by the tiling component 114. In some embodiments, the customizable routing system 104 uses the route frequency component 116 to generate a frequency-based lookup table using route history information gathered by the route history component 112, as described herein. In some embodiments, the frequency-based lookup table generated by the route frequency component 116 is used by the route generation component 120 to generate a customizable route, as described herein. In some embodiments, the frequency-based lookup table generated by the route frequency component 116 is adapted (for example, missing data is added) by the messaging and aggregation component 118 using systems and methods described herein. In some embodiments, the frequency-based lookup table generated by the route frequency component 116 is updated by the route update component 122 when, for example, road conditions change, as described herein.

In some embodiments, the customizable routing system 104 uses the messaging and aggregation component 118 to adapt the frequency-based lookup table (for example, generated by the route frequency component 116) to add missing data (for example, for new or missing nodes or edges) using algorithms described herein (for example, Algorithm 2). In some embodiments, the customizable routing system 104 uses the messaging and aggregation component 118 to adapt the frequency-based lookup table when missing node or edge data is detected. In some embodiments, the customizable routing system 104 uses the messaging and aggregation component 118 to update probabilities in the frequency-based lookup table when erroneous node or edge data is detected. In some embodiments, the messaging and aggregation component 118 operates continuously and automatically.

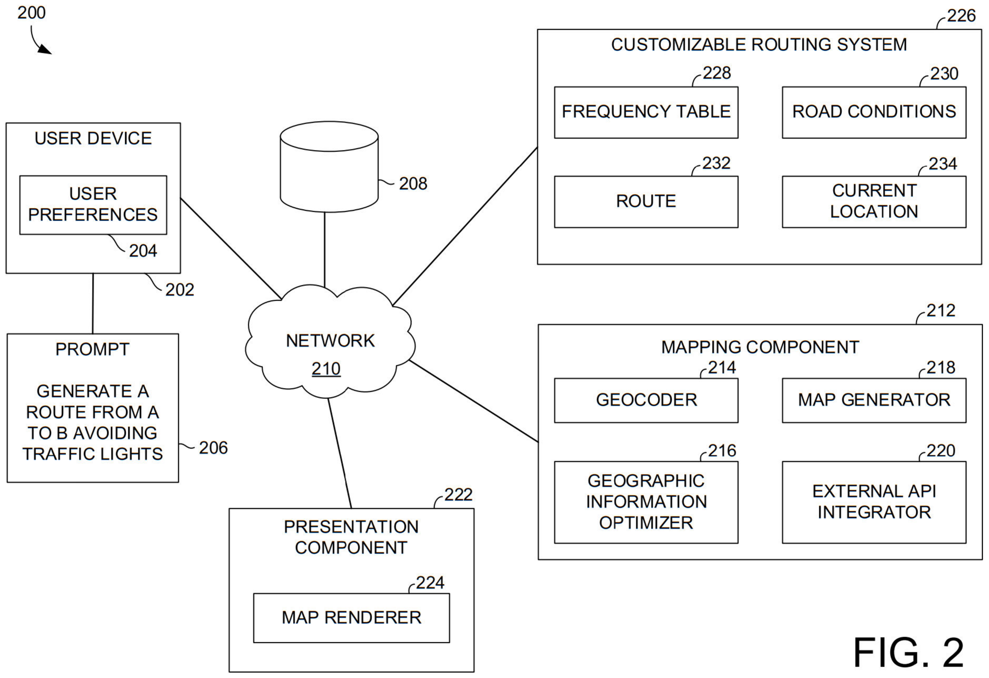

In some embodiments, the customizable routing system 104 uses the route generation component 120 to generate a customized route using the frequency-based lookup table and the algorithms described herein (for example, Algorithm 1). In some embodiments, the customizable routing system 104 uses the route generation component 120 to generate a customized route in response to a query from the user device 102. In some embodiments, the customizable routing system 104 uses the route generation component 120 to generate a customized route automatically (for example, not in response to a request from the user device 102). In some embodiments, the route generation component 120 generate a customized route using systems and methods described herein. In some embodiments, the customized route is presented to the user device 102 using a presentation component 222, described herein at least in connection with FIG. 2.

In some embodiments, the customizable routing system 104 uses the route update component 122 to update a route based on changes to the frequency-based lookup table (for example, either changes in road conditions, changes in probabilities generated by the messaging and aggregation component 118, or changes in user preferences). In some embodiments, the customizable routing system 104 uses the route update component 122 to update a route in response to a query from the user device 102. In some embodiments, the customizable routing system 104 uses the route update component 122 to update a route automatically (for example, not in response to a request from the user device 102). In some embodiments, the route update component 122 updates a route using systems and methods described herein. In some embodiments, the updated route is presented to the user device using a presentation component 222, described herein at least in connection with FIG. 2.

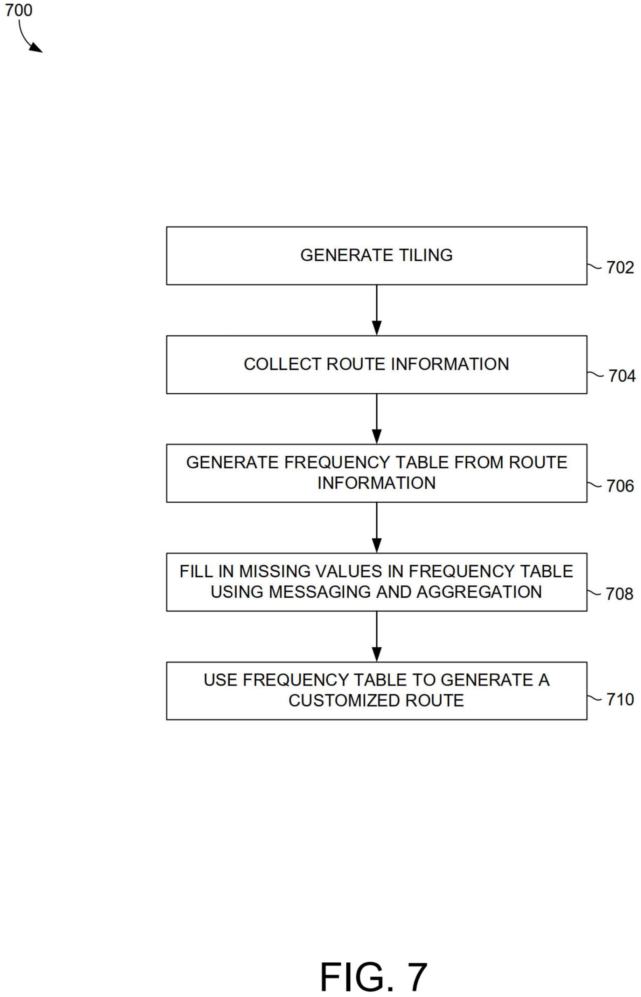

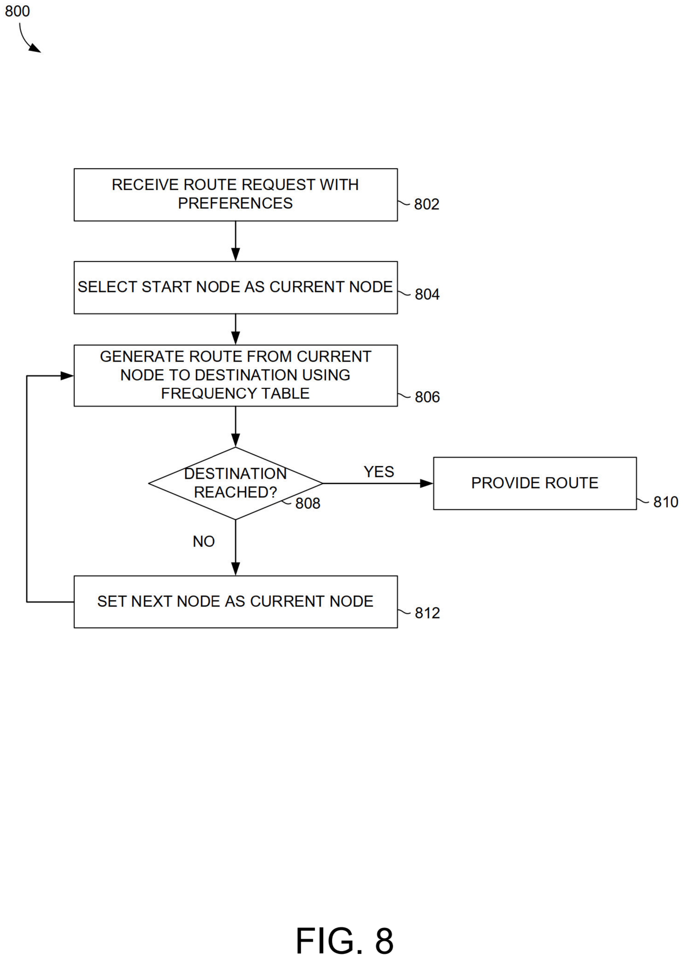

Components of the customizable routing system illustrated in block diagram 100 can be utilized to implement one or more of the components of system 200, as described in FIG. 2, including components for generating a customizable route, as described herein at least in connection with FIGS. 3-6. Components of the customizable routing system illustrated in block diagram 100 can also be utilized for implementing aspects of the methods for generating a frequency table for a customizable routing system and for generating a route using a customizable routing system described in FIGS. 7 and 8 respectively.

FIG. 2 is a block diagram 200 illustrating components of a mapping system that uses a customizable routing system, in accordance with embodiments of the present disclosure and generally designated as system 200. System 200 represents only one example of a suitable computing system architecture. Other arrangements and elements can be used in addition to or instead of those shown, and some elements may be omitted altogether for the sake of clarity. Further, as with system 200, many of the elements described herein are functional entities that are implemented as discrete or distributed components or in conjunction with other components, and in any suitable combination and location according to various embodiments.

Example system includes user device 202, which is a user device such as user device 102, described herein at least in connection with FIG. 1. In some embodiments, one or more user preferences 204 are used to generate route maps using a customizable routing system. In some embodiments, user preferences 204 are generated by a user or retrieved from storage 208, as described herein.

In some embodiments, a user can use user device 202 and user preferences 204 to generate a prompt 206 to, for example, generate a route from one point to another using user preferences 204 (for example, "generate a route from A to B avoiding traffic lights"). In some embodiments, prompt 206 is used by a mapping component 212 (described below) to generate a route map using a customizable routing system. In some embodiments, mapping component uses a customizable routing system 226 to generate a route map, as described herein. In some embodiments, customizable routing system 226 includes a frequency table 228, road conditions 230, a route 232, and a current location 234.

In some embodiments, frequency table 228 (also referred to herein as a frequency-based lookup table) is a table of probabilities conditioned on nodes or tiles of a road network. In some embodiments, frequency table 228 is generated using data obtained by a route history component 112 by a route frequency component 116, as described herein at least in connection with FIG. 1. In some embodiments, frequency table 228 is updated by a messaging and aggregation component 118 (also as described herein at least in connection with FIG. 1) to, for example, generate missing data and/or update erroneous data, as described herein. In some embodiments, frequency table 228 is used by a route generation component 120 (also as described herein at least in connection with FIG. 1) to generate a customizable route (for example, route 232), as described herein.

In some embodiments, road conditions 230 are used to update frequency table 228 (for example, based on changes in conditions of roads in the road network). In some embodiments, when road conditions 230 change (for example, when traffic changes, when weather changes, or at different times of the day), a route update component 122, described herein at least in connection with FIG. 1, updates frequency table 228. In some embodiments, an updated frequency table 228 is used to update or otherwise regenerate route 232, using systems and methods described herein.

In some embodiments, route 232 is a route generated based, at least in part, on prompt 206. In some embodiments, route 232 is generated from frequency table 228 using systems and methods such as those described herein. In some embodiments, route 232 can be changed, updated, or otherwise altered based on changes in frequency table 228 and/or based on other changes (for example, a user takes a different route than the one recommended, causing a new route to be generated).

In some embodiments, current location 234 is a current location of a user (for example, of a user device 202) within a road network. In some embodiments, current location 234 is a location along route 232. In some embodiments, current location 234 is not part of route 232 (for example, when a user has not started route 232, when a user has deviated from route 232, or when a user has completed route 232). In some embodiments, customizable routing system 226 generates a route (for example, route 232) from current location 234 to a destination specified by prompt 206 so that, for example, if a user starts at a source location "A" (also referred to herein as s), current location 234 is set to "A" and route 232 is a route from current location 234 to a destination "B" (also referred to herein as d). In some embodiments, as a user proceeds along route 232, customizable routing system 226 updates route 232 based on a new current location 234 so that, for example, if a user stays on route 232 and road conditions 230 do not change, then current location 234 may also be on route 232 as previously generated. In some embodiments, if a user deviates from route 232 so that current location is not on route 232 or road conditions change so that a new route 232 is to be generated, or some other conditions change (for example, new user preferences 204 are received), then a new route 232 may be generated using a current location 234. In some embodiments, a new destination "B" can also be selected by a user, causing generation of a new route 232 from current location 234 to the new destination "B".

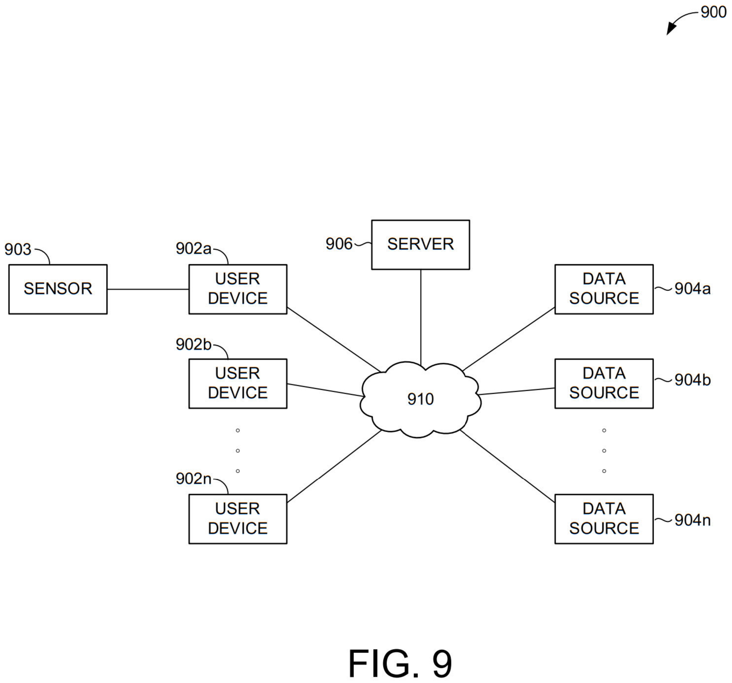

Example system 200 includes network 210, which is described in connection with FIG. 9, and which communicatively couples components of system 200 including user device 202, a mapping component 212, a presentation component 222, storage 208, and a customizable routing system 226. The system 200 is generally responsible for generating a response associated with geographical information and a mapping platform using a customizable routing system such as customizable routing system 104, described herein at least in connection with FIG. 1. In some embodiments, components in the system 200 are embodied as a set of hardware circuitry components (for example, a hardware accelerator, such as a GPU AI hardware accelerator), compiled computer instructions or functions, program modules, computer software services, a combination thereof, or an arrangement of processes carried out on one or more computer systems, such as those described herein including, but not limited to, user device 802a, server 806, both described herein at least in connection with FIG. 9.

In some embodiments, the functions performed by components of system 200 are associated with one or more personal assistant applications, services, or routines. In particular, such applications, services, or routines can operate on one or more user devices (such as user device 902a-902n of FIG. 9), servers (such as server 906 of FIG. 9), can be distributed across one or more user devices and servers, or be implemented in the cloud. Moreover, in some embodiments, these components of system 200 are distributed across a network, including one or more servers (such as server 906 of FIG. 9) and client devices (such as user device 902a of FIG. 9), in the cloud, or reside on a user device, such as user device 902a of FIG. 9. Moreover, these components, functions performed by these components, or services carried out by these components are implemented at appropriate abstraction layer(s) such as the operating system layer, application layer, and/or hardware layer of the computing system(s). Alternatively, or in addition, in some embodiments, the functionality of these components and/or the embodiments described herein are performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), and Complex Programmable Logic Devices (CPLDs). Additionally, although functionality is described herein with regards to specific components shown in example system 200, it is contemplated that in some embodiments functionality of these components are shared or distributed across other components.

In some embodiments, a user device 202 is used to generate a prompt 206 to generate a route along a network of roads. In some embodiments, prompt 206 is based on user preferences 204. For example, a user of user device 202 can generate a request to generate a route from point A to point B, and user preferences 204 can include a preference to avoid traffic lights, causing prompt 206 to comprise "generate a route from A to B avoiding traffic lights." In some embodiments, prompt 206 is sent to a mapping component 212 using network 210, as described herein.

In some embodiments, a contextual data extractor (not shown in FIG. 2) is used to generate some or all of prompt 206. As used herein, a contextual data extractor is used for extracting or determining contextual data. Contextual data can be any set of data or metadata associated with a prompt request. For example, where the contextual data is user information, such as user preferences 204, a contextual data extractor can access storage 208 (for example, a database) to retrieve one or more data records that include the user preferences. For instance a user may have downloaded a mapping consumer application from a mapping platform. Responsively, such mapping platform may request that the user directly register or state their preferences with respect to the mapping platform or other geographical information. For example, a user may input names of preferred roads to use while traveling, types of roads (for example, Interstates, as opposed to dirt roads), scenic routes, preferred locations to visit, or the like, which is then stored as a data record in storage 208. Alternatively or additionally, a contextual data extractor can access storage 208 to retrieve data records of past commands or questions issued by the user that indicate the user's preferences. For example, user preferences may have been indicated in current or past interactions with a mapping platform.

In some embodiments, a language model (not shown in FIG. 2) can perform Natural Language Processing (NLP) to generate a prompt 206 by taking, as input, one or more natural language questions or commands issued by a user, data from a contextual data extractor, and/or other entities to generate a response (for example, natural language characters responsive to the one or more natural language questions or commands). In some embodiments, a language model represents one or more machine learning models or other models that perform NLP. In some embodiments, a "language model" is a set of statistical or probabilistic functions that (for example, collectively) performs Natural Language Processing (NLP) in order to understand, learn, and/or generate human natural language content. For example, a language model may be a tool that determines the probability of a given sequence of words occurring in a sentence (for example, via Next Sentence Prediction (NSP) or MLM) or natural language sequence. Simply put, it may be a tool that is pre-trained to predict the next word in a sentence or other natural language character set. However, instead of predicting the next word in a sentence, a language model can be trained, tuned, or prompted to generate responses to user questions or commands associated with geographical information, as described in more detail below.

As used herein, a language model is referred to as a "large" language model ("LLM") when it is trained on large amounts of data. Some examples of LLMs are GOOGLE's BERT and OpenAI's family of generative pre-trained transformer (GPT) networks, which include GPT-2, GPT-3, and GPT-4. GPT-3, for example, includes 175 billion parameters trained on 570 gigabytes of text. These models have capabilities ranging from writing a simple essay to generating complex computer codes - all with limited to no supervision. Accordingly, an LLM is a deep neural network that is very large (for example, billions to trillions of parameters) and understands, processes, and produces human natural language from being trained on massive amounts of text. These models predict future words in a sentence based on sentences in the corpus of text they were trained on, allowing them to generate sentences which can be similar to how humans talk and write. In some embodiments, the LLM is pre-trained (for example, via NSP and MLM on a natural language corpus to learn English), prompt-tuned, fine-tuned, and/or functions via prompt engineering, as described in more detail below.

In some embodiments, a language model can be used to detect one or more entities in a natural language question, command, or other dataset. For example, in some embodiments, a language model can be used to detect entities via Named Entity Recognition (NER). NER is an information extraction Natural Language Processing (NLP) technique that identifies and classifies tokens/words or "entities" in natural language text into predefined categories. Such predefined categories may be indicated in corresponding tags or labels. Entities can be, for example, specific roads, names of people, specific organizations (for example, restaurants), specific locations or landmarks, features to avoid, specific times, specific quantities, specific monetary price values, specific music, and the like. Likewise, the corresponding tags or labels can be specific people, organizations, location, time, price (or other invoice data) and the like. NER and/or other NLP functionality can be used to understand and summarize natural language, such as tokenization (breaking text into words or phrases), stemming (reducing words to their base form), and part-of-speech tagging (identifying the grammatical role of words), semantic analysis (to derive meaning of a first word based on context/meaning of other words by the first word), and/or syntactic analysis (detecting the grammatical structure of a sentence or a sequence of words to determine its syntactic structure, or understand how words are organized in a sentence and how they relate to each other in terms of grammatical rules).

In some embodiments, a language model can also be used to recognize temporal entities such as dates, times, and durations from user natural language commands or questions. This allows a mapping component 212 to understand temporal constraints associated with certain requests. For instance, if a user asks for "Traffic conditions on I-95 tomorrow morning," a language model can be used to extract "tomorrow morning" as a temporal entity, providing the mapping component 212 with the necessary time frame for providing relevant information.

In some embodiments, prompt 206 additionally or alternatively includes any of the data extracted by a contextual data extractor, such as previous turns in a conversation, previous conversations, and also includes user preferences 204 (for example, a user preference to drive on certain types of roads, or to avoid traffic lights, or to search for the shortest route, or to search for the quickest route, etc.).

The mapping component 212 is generally responsible for generating map, route, and/or location data associated with prompt 206. The mapping component 212 includes a geocoder 214, a geographic information optimizer 216, a map generator 218, and an external API integrator 220.

In some embodiments, the geocoder 214 is generally responsible for translating or converting addresses or other identifiers of other geographical locations (for example, names of stores) into geographic coordinates (latitude and longitude) that can be understood by the mapping component 212. It involves converting textual location descriptions into precise geographic coordinates on the Earth's surface. In some embodiments, the geocoder 214 automatically detects a user device's location via Global Position System (GPS) functionality or the like (for example, even if the user does not include the user's location in a question or command).

In an illustrative example, the geocoder 214 can first retrieve geographic location entities by parsing a prompt 206 down into its individual components, such as street name, city, state, postal code, and country. This parsing ensures that the geocoder 214 can interpret and process each part of the address accurately. Responsively, the geocoder 214 can access storage 208 (for example, a database), which includes mapping data, such as streets, cities, and points of interest. This data may come from various sources, including government agencies, commercial providers, and crowd-sourced platforms. The geocoder 214 can then attempt to match the parsed address against the data in its database to find a corresponding geographic location. It may use various matching algorithms (for example, via fuzzy matching or spatial indexing, such as R-trees) to find the best match, taking into account factors such as spelling variations, abbreviations, and proximity to known landmarks. Once a match is found, in some embodiments the geocoder 214 assigns geographic coordinates (latitude and longitude) to the address based on the location information stored in storage 208. These coordinates represent the precise position of the address on the Earth's surface. In some embodiments, the geocoder 214 provides a measure of the accuracy or reliability of the geocoded result. This quality assessment may include indicators such as the confidence level of the match, the precision of the coordinates, and any potential discrepancies or ambiguities in the input address. In some embodiments, the geocoder 214 lastly returns the geocoded result to a user device in a standardized format, such as a JSON or XML response, and/or returns the result to the geographic information optimizer 216, and/or returns this information to a calling process. This output may include the latitude and longitude coordinates of the geocoded location, along with additional metadata such as the address components and quality indicators.

The geographic information optimizer 216 is generally responsible for calculating one or more routes, directions, distance (for example, in miles) to a location, or the like based on the geographical information detected by the geocoder 214. For example, in some embodiments the geographic information optimizer 216 calculates the best route between two or more points based on various factors such as distance, traffic conditions, and contextual data as described above. The geographic information optimizer 216 may thus determine the optimal path for navigation. For example, the geographic information optimizer may use Dijkstra's algorithm (described below), A* ("Astar"), or some other such pathfinding algorithm.

Generally, a pathfinding algorithm starts by initializing a priority queue (for example, implemented using a heap data structure) to store nodes and their associated costs. It assigns a cost of zero to the starting node and infinity to all other nodes. A pathfinding algorithm then iteratively explores neighboring nodes of the current node, updating their costs if a shorter path is found. It selects the node with the lowest cost from the priority queue for exploration. For each neighboring node of the current node, Dijkstra's algorithm computes the total cost of reaching that node from the starting node through the current node. If this cost is lower than the current cost associated with the neighboring node, the algorithm updates the neighbor's cost and predecessor accordingly. The algorithm continues exploring nodes and updating costs until all reachable nodes have been visited or until the destination node is reached. Once the destination node is reached, the algorithm terminates, and the shortest path from the starting node to the destination node is reconstructed by following the predecessor pointers. Various embodiments optimize Dijkstra's algorithm by incorporating additional factors such any of the data contained in a contextual data extractor, real-time traffic data, and/or the like. Such an algorithm can dynamically adjust the cost of edges (roads) based on these factors to calculate more accurate and efficient routes.

In some embodiments, the geographic information optimizer 216 may perform alternative or additional algorithms depending on the user-initiated question or command. For example, a user command may not necessarily request directions or a route to a location. Rather, the user may ask questions, such as "show me on the map where closest store A is located" or "where is the nearest hospital?" or "what are the road conditions like in city A?" Accordingly, various other optimization algorithms may use relevance ranking, collaborative filtering, content-based filtering, location-based recommendations, or temporal recommendations. The relevance ranking algorithm prioritizes search results based on relevance to the user's command or question. It considers factors such as the similarity of the location's name or description to the user's question/command terms, the popularity of the location, and its proximity to the user's current location. Collaborative filtering algorithms analyze the preferences and behaviors of similar users to recommend locations that are likely to be of interest to the current user. They leverage historical data on user interactions, such as ratings, reviews, and past search queries or the like, to generate personalized recommendations.

Content-based filtering algorithms recommend locations (for example, restaurants) based on their attributes and features, such as cuisine type, price range, ambiance, and special dietary options. They match the user's preferences with the characteristics of locations to identify the most suitable options. Location-based recommendation algorithms prioritize locations based on their proximity to the user device's current location or a specified location. They consider factors such as distance, travel time, and mode of transportation to recommend nearby locations that are convenient for the user to visit. Temporal recommendation algorithms take into account temporal factors, such as the time of day, day of the week, and current events, to recommend locations that are relevant to the user's context. For example, they may suggest brunch places on weekends or late-night eateries during the evening.

In another example, the user's command may be to "find the closest store A location." In this example, distance-based searched algorithms may be used to utilize spatial indexing techniques like quad trees or R-trees to efficiently search for the nearest store A to the user's location. This algorithm calculates the distance between the user's location and all stores in the database, selecting the one with the shortest distance. Hierarchical clustering may be used to group stores into clusters based on geographic proximity, then identify the cluster closest to the user's location. Within the selected cluster, some embodiments then refine the search to find the nearest individual store. Some embodiments precompute distances between store locations and popular user locations to accelerate the search process. Update these precomputed distances periodically to reflect changes in store locations or user preferences.

The map generator 218 is generally responsible for generating one or more maps and associated data for display by the map renderer 224 of presentation component 222. For example, the map generator 218 may first acquire the geographic data needed to generate the map based on making a programmatic call to the geocoder 214, the external API integrator 220, and/or storage 208. This data may include information about roads, landmarks, bodies of water, political boundaries, and other geographical features. In some embodiments, the map data is sourced from various providers, including governmental agencies, commercial vendors, and crowd-sourced platforms (as accessed via the external API integrator). Once the map data is acquired, some embodiments perform preprocessing to optimize it for rendering. This may involve simplifying geometries, reducing data resolution, and organizing the data into spatial data structures, such as quad trees or R-trees, for efficient querying and retrieval, or the like.

The external API integrator 220 is generally responsible for integrating with external APIs (Application Programming Interfaces) of other host systems (for example, cloud nodes or servers) to provide additional functionalities such as location-based services, weather information, points of interest, traffic data, satellite imagery, and business listings. For example, the mapping platform may then register with the external APIs they wish to integrate and obtain API keys or authentication tokens. These credentials are used to authenticate requests sent to the external API servers, ensuring secure access to the API endpoints.

When a user issues a command or question that requires data or functionality from an external API (for example, searching for nearby restaurants or displaying weather information), the mapping service constructs an API request with the necessary parameters and sends it to the external API server using HTTP or HTTPS protocols, for example. The external API server or host may then receive the request, processes it, and generate a response containing the requested data or functionality. This response may be in various formats such as JSON (JavaScript Object Notation), XML (eXtensible Markup Language), or Protobuf (Protocol Buffers). The external API integrator 230 may then parse the API response, extracts the relevant data or functionality, and integrates it into the user interface or underlying system. This may involve converting the data into a standardized format compatible with the mapping platform's data model and user interface components.

The presentation component 222 is generally responsible for causing presentation of information related to the mapping platform. For example, in some embodiments, the presentation component 222 causes presentation of a map and an indicator superimposed over the map representing an optimized route. In some embodiments, the presentation component 222 comprises one or more applications or services on a user device (for example, user device 202), across multiple user devices, or in the cloud. For example, in one embodiment, presentation component 222 manages the presentation of content to a user across multiple user devices associated with that user. Based on content logic, device features, associated logical hubs, inferred logical location of the user, and/or other user data, presentation component 222 may determine on which user device(s) content is presented, as well as the context of the presentation, such as how (or in what format and how much content, which can be dependent on the user device or context) it is presented and/or when it is presented. In particular, in some embodiments, presentation component 222 applies content logic to device features, associated logical hubs, inferred logical locations, or sensed user data to determine aspects of content presentation.

In some embodiments, presentation component 222 generates user interface features (or causes generation of such features) associated with pages. Such features can include user interface elements (such as graphics buttons, maps sliders, menus, audio prompts, alerts, alarms, vibrations, pop-up windows, notification-bar or status-bar items, in-app notifications, or other similar features for interfacing with a user), queries, and prompts. In some embodiments, a personal assistant service or application operating in conjunction with presentation component 222 determines when and how to present the content.

The presentation component 222 includes a map renderer 224. The map renderer 224 is generally responsible for rendering (for example, at a graphical user interface) a map and associated data. For example, the map renderer 224 may first divide a geographic area (as identified by the geocoder 214) into small rectangular tiles, each representing a portion of the map at a specific zoom level. These tiles may then be pre-rendered at different zoom levels and stored in a tile cache for fast retrieval during map display. Tile generation may use rendering engines like Mapnik or TileMill to rasterize vector map data into image tiles.

In some embodiments, the map renderer 224 then provides map styling, such as customizing the appearance of the map elements, such as roads, labels, and landmarks, to enhance readability and visual appeal. Map styling may be defined using map styling languages like Mapbox GL Styles or Google Maps Styling Wizard, which allow developers to specify colors, line styles, label fonts, and other visual properties for map features.

In some embodiments, the map renderer 224 then performs map projection by projecting the geographic data onto a two-dimensional surface for display on a flat screen. In some embodiments, this involves transforming the coordinates of map features from geographic coordinates (latitude and longitude) to Cartesian coordinates (x and y) using map projection techniques like Mercator projection, Albers projection, or Lambert conformal conic projection. The map renderer 224 may then processes the map data and styling information to generate the final map image for display. This pipeline may involves several stages, including data retrieval, feature selection, styling application, geometry transformation, and rasterization. Each stage applies transformations and rendering techniques to create the map image efficiently.

In some embodiments, the map renderer 224 provides interactive features, such as panning, zooming, and rotation, to allow users to explore the map dynamically. These interactive features may be implemented using client-side scripting languages like JavaScript, which handle user input events and update the map display accordingly in real-time.

In some embodiments, the map renderer 224 employs various optimization techniques to improve performance and reduce rendering time. This may include caching frequently accessed tiles, using vector tiles instead of raster tiles for better scalability, implementing level of detail (LOD) techniques to prioritize rendering of high-detail areas, and optimizing rendering algorithms for parallel processing.

In some embodiments, the map renderer 224 adapts to different devices and screen sizes to ensure optimal display across various platforms, including desktop computers, smartphones, and tablets. They may use responsive design principles and device detection techniques to adjust map styling, tile resolution, and interactive features based on the user's device and viewport size.

As described above, example system 200 includes storage 208. Storage 208 generally stores information including contextual data, computer instructions (for example, software program instructions, routines, or services), data structures, and/or models used in embodiments of the technologies described herein. In some embodiments, storage 208 represents any suitable data repository or device, such as a database, a data warehouse, RAM, cache, disk, RAID, and/or a storage network (for example, Storage Area Network (SAN)). In some embodiments, storage 208 includes data records (for example, database rows that represent each cluster) or other data structures (for example, key-value pairs) that contain any suitable information described herein. In some embodiments, each record is called or requested and returned, over the network 210, depending on the component needing it, as described herein.

FIG. 3 illustrates an example road network 300, in accordance with embodiments of the present disclosure. The example road network 300 illustrated in FIG. 3 is illustrated as a graph with nodes representing locations or intersections (for example, the circles) and directed edges representing roads between the locations or intersections. In the example road network 300 illustrated in FIG. 3, a source location s, a destination location d, and intersections $u_1$ to $u_{14}$ are shown. Roads between locations (for example, between source s and intersection $u_3$, between source s and intersection $u_6$, between intersection $u_3$ and intersection $u_1$, etc.) are shown as arrows and represent a single direction of travel between two nodes. Roads in the example road network 300 such as a two-way road that allows travel from intersection $u_3$ to intersection $u_1$ as well as travel from intersection $u_1$ to intersection $u_3$ which could be represented as either two arrows (for example, one in each direction) or as a double-arrow, are omitted for clarity.

The example road network 300 illustrated in FIG. 3 shows an example road network without probabilities or constraints so that, for example, route $\{s, u_3, u_4, u_5, u_6, u_8, u_{12}, d\}$ is a valid route as is route $\{s, u_3, u_1, u_2, d\}$, as is route $\{s, u_6, u_7, u_{10}, u_{13}, u_{14}, u_{11}, u_{12}, d\}$. In some embodiments, any route that begins with s and ends with $d$ may be a valid route. In some embodiments where, for example, sub-route $\{u_1, u_2\}$ is a highway, route $\{s, u_3, u_1, u_2, d\}$ may be a fastest route, route $\{s, u_3, u_4, u_5, u_6, u_8, u_{12}, d\}$ may be a route that avoids highways, and route $\{s, u_6, u_7, u_{10}, u_{13}, u_{14}, u_{11}, u_{12}, d\}$ may be a scenic route.

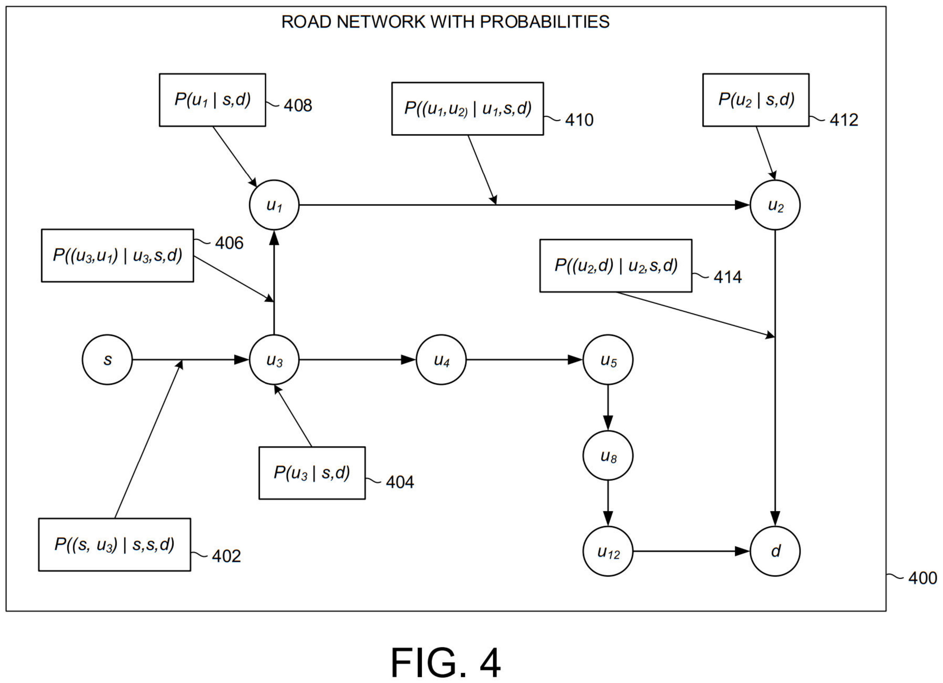

FIG. 4 illustrates an example road network with node and edge probabilities 400, in accordance with embodiments of the present disclosure. As with the example road network 300 illustrated in FIG. 3, the example road network with node and edge probabilities 400 is illustrated as a graph with nodes representing locations or intersections (for example, the circles) and directed edges representing roads between the locations or intersections. In the example road network 400 illustrated in FIG. 4, a source location *s,* a destination location *d,* and intersections $u_1$ to $u_{14}$ are shown. Roads between locations (for example, between source s and intersection $u_3$, between source s and intersection $u_6$, between intersection $u_3$ and intersection $u_1$, etc.) are shown as arrows as described above.

The example road network with node and edge probabilities 400 includes edge probabilities and node probabilities as described herein. For example, the example road network with node and edge probabilities 400 includes an edge probability 402 of the road between s and $u_3$ that is $P((s, u_3)\,|\,s,s,d)$ which represents properties of the road from *s* to $u_3$ (for example, speed limit, length, safety, etc.). Similarly, the example road network with node and edge probabilities 400 includes a node probability 404 of node $u_3$ that is $P(u_3\,|\,s, d)$ which represents properties of the intersection at node $u_3$ (for example, traffic lights, street lights, safety, locations at the intersection, etc.).

As illustrated in FIG. 4, a route between *s and d* such as route $\{s, u_3, u_1, u_2, d\}$ has edge probabilities (for example, edge probability 402, edge probability 406, edge probability 410, and edge probability 414) and node probabilities (for example, node probability 404, node probability 408, and node probability 412). In some embodiments, as shown in FIG. 4, node *s* does not have a node probability or the node probability of node *s* is not known. In some embodiments, not shown in FIG. 4, node *s* has a node probability (for example, $P(s\,|\,s,d)$). Similarly, in some embodiments, as shown in FIG. 4, node *d* does not have a node probability or the node probability of node *d* is not known. In some embodiments, not shown in FIG. 4, node *d* has a node probability (for example, $P(d\,|\,s,d)$).

In some embodiments, given a road network such as the road network with node and edge probabilities 400, a source node s and a destination node *d,* the probability of a route *L* between *s and d* (for example, route $\{s, u_3, u_1, u_2, d\}$) being the desired route is defined as:

$$P(L|s,d) = \prod_{(u,v)\in L} P((u,v)|s,d) \qquad (1)$$

where $(u, v)$ denotes a directed edge in the network from node *u* to node *v* (for example, from node $u_3$ to node $u_1$) and $P((u, v)|s, d)$ represents the probability of an edge $(u, v)$ being passed through along a route *L* from source s to destination *d.* In some embodiments, an optimal route $\hat{L}$ is the route that maximizes $P(L|s, d)$. In some embodiments, $\hat{L}$ can only be found by evaluating all possible routes in the road network.

In some embodiments, equation (1) can be decomposed using the Markov property (for example, the property that, to make predictions of the behavior of a system in the future, it suffices to consider only the present state of the system and not the past history) to conditional probabilities (for example, equation (2) and equation (3)):

$$P(L|s,d) = \prod_{(u,v)\in L} P((u,v)|u,s,d)P(u|s,d) \qquad (2)$$

$$= \prod_{(u,v)\in L} P((u,v)|u,d)P(u|s,d) \qquad (3)$$

In some embodiments, node probabilities (for example, node probability 404, node probability 408, and node probability 412) and edge probabilities (for example, edge probability 402, edge probability 406, edge probability 410, and edge probability 414) are used in equation (3) to determine $P(L|s, d)$ and thus approximate an optimal route $\hat{L}$.

In a classic Dijkstra's algorithm (described above), $P(u|s, d)$ is assumed to be a constant from a uniform distribution and $P((u, v)|u, s, d)$ is a normalized value inversely proportional to the distance between $u$ and $v$. Using customizable routing, as described herein, additional factors and preferences can be incorporated into these probabilities (for example, speed limit, length, safety, etc. for roads between nodes and traffic lights, street lights, safety, locations at the intersection, etc.) for nodes. For example, $P((u, v)|u, s, d)$ can reflect the number of lanes, the speed limit, the length of the road between $u$ and $v$ and $P(u|s, d)$ can reflect the presence of stop lights or stop signs, the risk of accidents, etc.

As described above, in a classic Dijkstra's algorithm where $P(u|s, d)$ is assumed to be a constant, $P((u, v)|u, d)$ can represent a basic road segment property such as distance or travel time (for example, as in the example road network 300 illustrated in FIG. 3). In some embodiments, path finding using an algorithm such as Dijkstra's algorithm or A* can be enhanced by learning routing patterns based on a collection of historical routes, as described above in connection with FIGS. 1 and 2. In some embodiments, as described above, given a collection of past route recommendations (for example, from past routes recommended or taken) for a given road network, a frequency-based lookup table can be generated such that, for example, the frequency that one route from $s$ to $d$ is recommended or taken (for example, route $\{s, u_3, u_4, u_5, u_6, u_8, u_{12}, d\}$) is recorded as is the frequency that another route from $s$ to $d$ is recommended or taken (for example, route $\{s, u_3, u_1, u_2, d\}$) is recorded as is the frequency that another route from $s$ to $d$ is recommended or taken (for example, route $\{s, u_6, u_7, u_{10}, u_{13}, u_{14}, u_{11}, u_{12}, d\}$). In some embodiments, the frequency that subsets of a route (also referred to herein as "sub-routes") are recommended or taken (for example, the frequency that the route from $u_3$ to $u_1$, sub-route $\{u_3, u_1\}$ is recommended or taken) when a route from $s$ to $d$ is recommended or taken.

In some embodiments, this frequency-based lookup table records a normalized frequency value for each road segment that is passed through given any destination node $d$. It should be noted that, by the Markov property, the path from a current node (for example, $u_i$) to a destination node $d$ is used since the path from the source node $s$ to the current node $u_i$ is not required. In some embodiments, this frequency-based lookup table enables a conditional routing system to query the probability of each edge given the destination and as these probabilities include the various additional factors and preferences, as described above, a user's preferences can be considered when generating a route. For example, if a user has a preference to avoid traffic lights, and a node probabilities (for example, node probability 404, node probability 408, node probability 412) indicate the presence of traffic lights, a penalty value can be used to discourage intersections (for example, nodes) with traffic lights by decreasing the probability that such nodes are selected in the route to destination $d$.

FIG. 5 illustrates an example tiling of a road network 500, in accordance with embodiments of the present disclosure. In particular, FIG. 5 illustrates a tiling of the example road network with node and edge probabilities 400 illustrated in FIG. 4 (with the edge and node probabilities of FIG. 4 not shown in FIG. 5, for clarity). As with the example road network 300 illustrated in FIG. 3, and the example road network with node and edge probabilities 400 illustrated in FIG. 4, the example tiling of a road network 500 is illustrated as a graph with nodes representing locations or intersections (for example, the circles) and directed edges representing roads between the locations or intersections and tiles (for example, TILE 0,0, TILE 0,1, TILE 0,2, etc.). In the example tiling of a road network 500 illustrated in FIG. 5, a source location $s$, a destination location $d$, and intersections $u_1$ to $u_{14}$ are shown. Roads between locations (for example, between source $s$ and intersection $u_3$, between source $s$ and intersection $u_6$, between intersection $u_3$ and intersection $u_1$, etc.) are shown as arrows as described above.

FIG. 6 illustrates a tiled road network 600, in accordance with embodiments of the present disclosure. In particular, FIG. 6 illustrates a graph representation of the example tiling of a road network 500, illustrated in FIG. 5, which is a tiling of the example road network with node and edge probabilities 400 illustrated in FIG. 4.

In the FIG. 6, the nodes correspond to tiles that include nodes of the example road network with node and edge probabilities 400. As illustrated, the node denoted "TILE 0,0" includes source node $s$, the node denoted "TILE 0,1" includes node $u_1$ and node $u_3$, the node denoted "TILE 0,2" includes node $u_4$, the node denoted "TILE 0,3" includes node $u_5$, the node denoted "TILE 0,4" includes node $u_2$, the node denoted "TILE 1,0" includes node $u_6$ and node $u_9$, the node denoted "TILE 1,1" includes node $u_7$ and node $u_{10}$, the node denoted "TILE 1,2" includes node $u_{11}$, the node denoted "TILE 1,3" includes node $u_8$ and node $u_{12}$, the node denoted "TILE 1,4" includes node $d$, the node denoted "TILE 2,1" includes node $u_{13}$, the node denoted "TILE 2,2" includes node $u_{14}$, and the nodes denoted "TILE 2,0", "TILE 2,3", and "TILE 2,4" do not contain any nodes.

As used herein, individual tiles of tiled road network 600 are also referred to as a tile of the road network and any particular tile of the road network includes a portion of the nodes of the representation (for example, of the example road network with node and edge probabilities 400). As used herein, a tile of the road network including a portion of the nodes of the representation indicates that the tile of road network includes zero or more nodes of the representation. For example, a tile of the road network including a portion of the nodes of the representation can indicate that the tile of the road network includes zero nodes (for example, "TILE 2,0", "TILE 2,3", or "TILE 2,4"). In another example, a tile of the road network including a portion of the nodes of the representation can indicate that the tile of the road network includes one node (for example, "TILE 0,0", "TILE 0,2", or "TILE 0,3"). In another example, a tile of the road network including a portion of the nodes of the representation can indicate that the tile of the road network includes two or more nodes (for example, "TILE 0,1", "TILE 1,0", or "TILE 1,1").

In FIG. 6, edges between the nodes represent routes between the tiles. As illustrated, there is an edge between "TILE 0,0" and "TILE 0,1" (for example, the route between node s and node $u_3$), an edge between "TILE 0,0" and "TILE 1,0" (for example, the route between node s and node $u_6$), an edge between "TILE 0,1" and "TILE 0,2" (for example, the route between node $u_3$ and node $u_4$), an edge between "TILE 0,1" and "TILE 1,1" (for example, the route between node $u_3$ and node $u_7$), an edge between "TILE 0,1" and "TILE 0,4" (for example, the route between node $u_1$ and node $u_2$), an edge between "TILE 0,2" and "TILE 0,3" (for example, the route between node $u_4$ and node $u_5$), an edge between "TILE 0,2" and "TILE 1,2" (for example, the route between node $u_4$ and node $u_{11}$), an edge between "TILE 0,3" and "TILE 1,3" (for example, the route between node $u_5$ and node $u_8$), an edge between "TILE 0,4" and "TILE 1,4" (for example, the route between node $u_2$ and node d), an edge between "TILE 1,0" and "TILE 1,1" (for example, the route between node $u_6$ and node $u_7$ and the route between node $u_9$ and node $u_{10}$), an edge between "TILE 1,1" and "TILE 2,1" (for example, the route between node $u_{10}$ and node $u_{13}$), an edge between "TILE 1,2" and "TILE 1,3" (for example, the route between node $u_{11}$ and node $u_{12}$), an edge between "TILE 1,3" and "TILE 1,4" (for example, the route between node $u_{12}$ and node d), an edge between "TILE 2,1" and "TILE 2,2" (for example, the route between node $u_{13}$ and node $u_{14}$), and an edge between "TILE 2,2" and "TILE 1,2" (for example, the route between node $u_{14}$ and node $u_{11}$). As illustrated in FIG. 6, there are no edges between certain nodes as there are no routes between those nodes and there are no edges either into or out of "TILE 2,0", "TILE 2,3", or "TILE 2,4".

As with the example road network with node and edge probabilities 400 illustrated in FIG. 4, although not illustrated in FIG. 6 for clarity, each node u (for example, "TILE 0,0") has a node probability $P(u|s, d)$ and each edge out of node u has an edge probability $P((u, v)|u, d)$, as described herein in connection with FIG. 4. In the example illustrated in FIG. 4, a node such as "TILE 2,0" may have a zero value for its node probability and a zero value for its edge probability since there are no routes from "TILE 2,0" to "TILE 1,4", where node d is located. These zero values are indicative that there are no historical routes between "TILE 2,0" and d. In some embodiments, these zero values are because there are no routes. In some embodiments, these zero values are because no route data has been collected that includes "TILE 2,0".

In some embodiments, probabilities of nodes and edges are collected after a road network has been tiled (for example, node probabilities are probabilities of tiles and edge probabilities are probabilities of routes between tiles). In some embodiments, probabilities of nodes and edges are collected before a road network has been tiled (for example, node probabilities are probabilities of intersections and edge probabilities are probabilities of roads between intersections). In such embodiments, node probabilities of a tile may be computed from probabilities of individual intersections within that tile (for example, by addition, averaging, maximizing, minimizing, or some other such computation) and edge probabilities between tiles may be similarly computed from edge probabilities of roads between intersections in that tile and neighboring tiles.

Given the above, given a road network such as the tiled road network 400, a source node s (for example, "TILE 0,0") and a destination node d (for example, "TILE 1,4"), the probability of a route L between s and d (for example, route {s, "TILE 0,1", "TILE 0,4", d}) being the desired route is defined using equation (1):

$$P(L|s,d) = \prod_{(u,v)\in L} P((u,v)|s,d) \qquad (1)$$

as described above in connection with FIG. 4 and equation (1) can again be decomposed using the Markov property to conditional probabilities (for example, equation (2) and equation (3)):

$$P(L|s,d) = \prod_{(u,v)\in L} P((u,v)|u,s,d)P(u|s,d) \qquad (2)$$

$$= \prod_{(u,v)\in L} P((u,v)|u,d)P(u|s,d) \qquad (3)$$

As described above, in a classic Dijkstra's algorithm where $P(u|s, d)$ is assumed to be a constant, $P((u, v)|u, d)$ can represent a basic road segment property such as distance or travel time (for example, as in the example road network 300 illustrated in FIG. 3). In some embodiments, path finding using an algorithm such as Dijkstra's algorithm or A* can be enhanced by learning routing patterns based on a collection of historical routes, as described above. In some embodiments, as described above, given a collection of past route recommendations (for example, from past routes recommended or taken) for a given road network, a frequency-based lookup table can be generated such that, for example, the frequency that any one route from s to d is recommended or taken.

In some embodiments, this frequency-based lookup table records a normalized frequency value for each road segment that is passed through given any destination node d. It should be noted that, by the Markov property, the path from a current node (for example, "TILE 0,1") to a destination node d is used since the path from the source node s to the current node is not required. In some embodiments, this frequency-based lookup table enables a conditional routing system to query the probability of each edge given the destination and as these probabilities include the various additional factors and preferences, as described above, a user's preferences can be considered when generating a route. For example, if a user has a preference to avoid traffic lights, and a node probabilities indicate the presence of traffic lights, a penalty value can be used to discourage intersections (for example, nodes) with traffic lights by decreasing the probability that such nodes are selected in the route to destination *d*.

In some embodiments, the historical route data between tiles is used to generate a frequency-based lookup table that is conditioned on the tiles and the edges. In some embodiments, for each road segment, the number of times that that road segment is traversed *en route* to a certain tile is counted and then that value is normalized by dividing the count by the total number of trajectories that end up in that tile (for example, for all routes). This normalized value is treated as *P((u, v)|u, d)*. This operation of normalizing the value is referred to herein as normalizing the frequency, where the frequency value of any particular frequency value is normalized by dividing the count by the total number of trajectories that end up in that tile.

In some embodiments, this normalized frequency value is used as described below. The pathfinding algorithm described below, which is a modification of Dijkstra's algorithm, is performed in two parts, referred to herein as "in-tile path finding" and "out-tile path finding." For in-tile path finding (for example, for a query that is entirely within a tile, as shown in lines 8-12 of Algorithm 1) a standard pathfinding algorithm such as A* is used. For out-tile path finding (lines 13-20 of Algorithm 1), the product of frequencies conditioned on the destination tile along the route is used to find the maximum frequency product from the source node to the destination tile, thereby favoring routes that are more likely to be chosen based on the historical trajectories.

Algorithm 1, described herein illustrates in-tile path finding and out-tile path finding using frequency-based path finding.

### Algorithm 1: Frequency-Based Path Finding

1: **procedure** FREQDIJKSTRA(*src, dest, G, Freq_table*)

2:     Initialize $\forall v \in G, freq[v] \leftarrow -\infty$

3:     $freq[src] \leftarrow 1$

4:     Initialize priority queue $Q \leftarrow \{(src, 1)\}$

5:     Initialize *path[#nodes]*

6:     **while** $Q \neq \emptyset$ **do**

7:         $(u, f_u) \leftarrow Extract - Max(Q)$

8:         **if** *Tile(u) = Tile(dest)* **then**

9:             $p_{out} \leftarrow Reconstruct - Path(path, src, u)$

10:             $p_{in} \leftarrow Astar(u, dest, G)$

11:             **return** $p_{out} + p_{in}$

12:         **end if**

13:         **for** $v \in Neighbors(u)$ **do**

14:             $f_{uv} \leftarrow \begin{cases} Freq\_table[Tile(dest)][(u,v)] & \text{if it exists} \\ FreqPassing(u, v, Tile(dest)) & \text{otherwise} \end{cases}$

15:             $f_v \leftarrow f_u \times f_{uv}$

16:             **if** $f_v > freq[v]$ **then**

17:                 $freq[v] \leftarrow f_v; path[v] \leftarrow u$

18:                 $Q \leftarrow Q \cup \{(v, f_v)\}$

19:             **end if**

20:         **end for**

21:     **end while**

22:  **end procedure**

As described above, in some embodiments, some portions of a frequency-based lookup table may be missing when, for example, there are few or no historical route recommendations in less populated or less traveled areas. In some embodiments, a modified message-passing method can be used to estimate missing values in the frequency-based lookup table. In some embodiments, message passing is a technique used in graph neural networks (GNNs) where information is passed between nodes of a graph and aggregated to fill in missing data. Using message passing, a GNN can use local neighborhood information (for example, information about neighboring nodes) to update information in other nodes. Algorithm 2, described below, shows a modified message-passing algorithm that uses the principle of GNN message passing to update frequency values for nodes in a road network such as tiled road network 600.

As described herein, Algorithm 2 comprises three steps. In some embodiments, in a first messaging step, each node or edge of a graph computes a message for each of its neighbors that comprises the frequency count learned from historical route recommendations, as described herein. In some embodiments, in a second aggregation step, a node or edge aggregates the messages it receives (from its neighbors) using a permutation-invariant function. In some embodiments, this permutation-invariant function is an average of all received frequency values. In some embodiments, this permutation-invariant function may be some other computation such as, a total, a maximum, a minimum, etc. In some embodiments, in a third update step, each node or edge updates its attributes based on a function of its current values and the aggregated messages (for example, aggregated in step 2). In some embodiments, a node or edge updates its attributes using an exponential smoothing function. In some embodiments, these three steps are repeated a plurality of times (for example, N times, which is an analog of the depth of a GNN).

Algorithm 2, described herein, illustrates this frequency passing by messaging, aggregation, and updating.

## Algorithm 2: Frequency Passing

1:  **procedure** FREQPASSING(*u, v, tile, Counts_table, α*)

2:     Initialize *missing_edges* as edges around (*u,v*) without history counts up to *N*

     steps

3:     Initialize $h^0 \leftarrow Counts\_table[tile]$

4:     **for** $i \leftarrow 1\ to\ N$ **do**

5:          $h^i \leftarrow h^{i-1}$

6:          **for** each edge *(u',v')* in *missing_edges* **do**

7:               $h^i_{(u',v')} \leftarrow α*h^{i-1}_{(u',v')} + (1-α)*MEAN(h^{i-1}_{(v',*)})$

8:          **end for**

9:     **end for**

10:     $freq_{(u,v)} \leftarrow h^N_{(u,v)} | SUM(h^N_{(u,*)})$

11:     **return** $freq_{(u,v)}$

12: **end procedure**

FIG. 7 is a flow diagram 700 of a process for generating a frequency table for a customizable routing system, in accordance with embodiments of the present disclosure. The process for generating a frequency table for a customizable routing system illustrated in flow diagram 700 (and/or any of the functionality described herein) may be performed by processing logic that comprises hardware (for example, circuitry, dedicated logic, programmable logic, microcode, and the like), software (for example, instructions run on a processor to perform hardware simulation), firmware, or a combination thereof. For instance, various functions of the process for generating a frequency table for a customizable routing system illustrated in flow diagram 700 are carried out by a processor executing instructions stored in memory, such as memory 1012 as described in FIG. 10 and/or as storage 208 as described in FIG. 2. Embodiments of the process for generating a frequency table for a customizable routing system illustrated in flow diagram 700 can also be implemented using computer-usable instructions stored on computer storage media. Embodiments of the process for generating a frequency table for a customizable routing system illustrated in flow diagram 700 are provided by a stand-alone application, a service or hosted service (stand-alone or in combination with another hosted service), or a plug-in to another product, to name a few. For example, the blocks of the process for generating a frequency table for a customizable routing system illustrated in flow diagram 700 correspond to operations (or steps) to be performed (as opposed to information to be processed or acted on). In some embodiments, these operations are carried out by one or more computer applications or services, which operate on one or more: user devices (such as user device 902a of FIG. 9), servers (such as server 906 of FIG. 9), distributed computing systems, or in the cloud. Further and in some embodiments, the functions performed by the blocks of the process for generating a frequency table for a customizable routing system illustrated in flow diagram 700 are carried out by components of system 100, as described in FIG. 1 and/or by components of system 200, as described in FIG. 2.

Although particular blocks of process for generating a frequency table for a customizable routing system illustrated in flow diagram 700 described in this disclosure are referenced in a particular order at a particular quantity, it is understood that any block may occur substantially parallel with or before or after any other block. Further, more (or fewer) blocks may exist than illustrated. Added blocks may include blocks that embody any functionality described herein (for example, as described with respect to FIGS. 1-6). The computer-implemented method, the system (that includes at least one processor and at least one computer readable storage medium), and/or the computer readable medium as described herein may perform or be caused to perform the process for generating a frequency table for a customizable routing system illustrated in flow diagram 700, or any other functionality described herein.

At block 702 of the process for generating a frequency table for a customizable routing system illustrated in flow diagram 700, a processor performs operations to generate a tiling of a region as described herein at least in connection with FIG. 5 (for example, to generate a tiling of a road network 500). For example, for a region comprising a road network, a tiling of the region is generated that subdivides the region into different tiles where each tile includes a portion of the region and each tile can include intersections and/or other nodes of a road network. In some embodiments, generated tiles do not include any nodes of a road network (for example, "TILE 2,0" of FIG. 5). In some embodiments, after block 702, the process for generating a frequency table for a customizable routing system illustrated in flow diagram 700 continues at block 704.

At block 704, a processor performs operations to collect route information as described herein at least in connection with FIG. 1. In at least one embodiment, route information (also referred to herein as historical route information) is collected or otherwise obtained using a route history component such as route history component 112, described herein at least in connection with FIG. 1. In some embodiments, route information is collected from nodes and edges of a road network (for example, as described herein at least in connection with FIG. 3). In some embodiments, route information is collected from nodes and edges of a tiled road network (for example, the tiled road network generated at block 702), as described herein at least in connection with FIG. 6. In some embodiments, after block 704, the process for generating a frequency table for a customizable routing system illustrated in flow diagram 700 continues at block 706.

At block 706, a processor performs operations to generate a frequency table from the route information collected at block 704. For example, at block 706, a processor performs operations to use route information to generate a normalized frequency indicating a probability that any particular route from a node or tile is taken to reach a destination from that node or tile. In some embodiments, a frequency table is generated using systems and methods described herein at least in connection with FIGS. 1-6 (for example, route data is collected, a frequency is computed, a probability is computed by normalizing that frequency, and a frequency table is conditioned on nodes or tiles of the road network. In some embodiments, after block 706, the process for generating a frequency table for a customizable routing system illustrated in flow diagram 700 continues at block 708.

At block 708, a processor performs operations to fill in missing values of the frequency table using messaging and aggregation (for example, using Algorithm 2, described herein at least in connection with FIG. 6). In some embodiments, operations to fill in missing values of the frequency table using messaging and aggregation are performed using a messaging and aggregation component 118, described herein at least in connection with FIG.1. In some embodiments, after block 708, the process for generating a frequency table for a customizable routing system illustrated in flow diagram 700 continues at block 710.

At block 710, a processor performs operations to use the frequency table generated at block 706 and/or updated at block 708 to generate a customized route. In some embodiments, the operations to use the frequency table to generate a customized route are performed using systems and methods described herein at least in connection with FIG. 1 (for example, using Algorithm 1). In some embodiments, the operations to use the frequency table to generate a customized route are performed using route generation component 120, described herein at least in connection with FIG. 1. In some embodiments, the operations to use the frequency table to generate a customized route are performed using other elements of system 100, also described herein at least in connection with FIG. 1. In some embodiments, the operations to use the frequency table to generate a customized route are performed using elements of system 200, described herein at least in connection with FIG. 2. In some embodiments, after block 710, the process for generating a frequency table for a customizable routing system illustrated in flow diagram 700 terminates. In some embodiments, not shown in FIG. 7, after block 710, the process for generating a frequency table for a customizable routing system illustrated in flow diagram 700 continues at block 704, or at block 706, or at block 708. In some embodiments, the frequency table for route finding is used by a process for generating a route using a customizable routing system, described herein at least in connection with FIG. 8.

In some embodiments, not shown in FIG. 7, steps of the process for generating a frequency table for a customizable routing system illustrated in flow diagram 700 can be performed in a different order than is illustrated in FIG. 7. For example, in some embodiments, block 702 can be performed after block 704, or after block 706, or after block 708. In some embodiments, also not shown in FIG. 7, steps of the process for generating a frequency table for a customizable routing system illustrated in flow diagram 700 that do not rely on each other can be performed in parallel or concurrently. For example, in some embodiments, block 702 can be performed concurrently with one or more of block 704, block 706, and/or block 708.

FIG. 8 is a flow diagram 800 of a process for generating a route using a customizable routing system, in accordance with embodiments of the present disclosure. The process for generating a route using a customizable routing system illustrated in flow diagram 800 (and/or any of the functionality described herein) may be performed by processing logic that comprises hardware (for example, circuitry, dedicated logic, programmable logic, microcode, and the like), software (for example, instructions run on a processor to perform hardware simulation), firmware, or a combination thereof. For instance, various functions of the process for generating a route using a customizable routing system illustrated in flow diagram 800 are carried out by a processor executing instructions stored in memory, such as memory 1012 as described in FIG. 10 and/or as storage 208 as described in FIG. 2. Embodiments of the process for generating a route using a customizable routing system illustrated in flow diagram 800 can also be implemented using computer-usable instructions stored on computer storage media. Embodiments of the process for generating a route using a customizable routing system illustrated in flow diagram 800 are provided by a stand-alone application, a service or hosted service (stand-alone or in combination with another hosted service), or a plug-in to another product, to name a few. For example, the blocks of the process for generating a route using a customizable routing system illustrated in flow diagram 800 correspond to operations (or steps) to be performed (as opposed to information to be processed or acted on). In some embodiments, these operations are carried out by one or more computer applications or services, which operate on one or more: user devices (such as user device 902a of FIG. 9), servers (such as server 906 of FIG. 9), distributed computing systems, or in the cloud. Further and in some embodiments, the functions performed by the blocks of the process for generating a route using a customizable routing system illustrated in flow diagram 800 are carried out by components of system 100, as described in FIG. 1 and/or by components of system 200, as described in FIG. 2.

Although particular blocks of the process for generating a route using a customizable routing system illustrated in flow diagram 800 described in this disclosure are referenced in a particular order at a particular quantity, it is understood that any block may occur substantially parallel with or before or after any other block. Further, more (or fewer) blocks may exist than illustrated. Added blocks may include blocks that embody any functionality described herein (for example, as described with respect to FIGS. 1-6). The computer-implemented method, the system (that includes at least one processor and at least one computer readable storage medium), and/or the computer readable medium as described herein may perform or be caused to perform the process for generating a route using a customizable routing system illustrated in flow diagram 800, or any other functionality described herein.

At block 802 of the process for generating a route using a customizable routing system illustrated in flow diagram 800, a processor receives a route request with preferences. In some embodiments, a route request received at block 802 is a prompt such as prompt 206 that is received from a user device such as user device 202 by a customizable routing system such as customizable routing system 226, all described herein at least in connection with FIG. 2. In some embodiments, a route request received at block 802 is based, at least in part, on user preferences (for example, user preferences 204, also described herein at least in connection with FIG. 2). For example, a route request received at block 802 can be a request to "generate a route from A to B avoiding traffic lights," as described herein, where the desired route is from "A" to "B" and the preferences are "avoiding traffic lights." In some embodiments, a route request received at block 802 is generated by a user, as described herein. In some embodiments, a route request received at block 802 is automatically generated when, for example, a current position of a user device changes or when road conditions change, as described herein. In some embodiments, after block 802, the process for generating a route using a customizable routing system illustrated in flow diagram 800 continues at block 804.

At block 804, a processor performs operations to select a starting node and make that selected node the current node. For example, if a route request received at step 802 is a request for a route from "A" to "B," at block 804, a node or tile corresponding to location "A" is selected as the current node. In some embodiments, after block 804, the process for generating a route using a customizable routing system illustrated in flow diagram 800 continues at block 806.

At block 806, a processor performs operations to generate a route from the selected current node (for example, selected at block 804 or set at block 812, described below) to the destination using the frequency table generated using the process for generating a frequency table for a customizable routing system illustrated in flow diagram 700. In some embodiments, the operations to generate a route from the selected current node to the destination are performed using Algorithm 1, described herein at least in connection with FIG. 1. In some embodiments, the operations to generate a route from the selected current node to the destination are performed using components of system 100, described herein at least in connection with FIG. 1 and/or using components of system 200, described herein at least in connection with FIG. 2. In some embodiments, after block 806, the process for generating a route using a customizable routing system illustrated in flow diagram 800 continues at block 810.

At block 808, a processor performs operations to determine whether the destination of the route requested at block 802 has been reached (for example, whether the route generated at block 806, is a simple edge that terminates at the destination or whether the next node is the destination). In some embodiments, at block 808, if it determined that the destination has been reached (the "YES" branch), the process for generating a route using a customizable routing system illustrated in flow diagram 800 continues at block 810. In some embodiments, at block 808, if it determined that the destination has not been reached (the "NO" branch), the process for generating a route using a customizable routing system illustrated in flow diagram 800 continues at block 812.

At block 810, a processor performs operations to provide the generated route (for example, the route requested at block 802). In some embodiments, the route is provided to a user device 202 using a presentation component 222, both as described herein at least in connection with FIG. 2. In some embodiments, not shown in FIG. 8, an intermediate route is provided before a destination is reached (for example, at block 808) so that, for example, a route is provided to a user continuously as blocks 806-812 are performed. In some embodiments, after block 810, the process for generating a route using a customizable routing system illustrated in flow diagram 800 terminates. In some embodiments, not shown in FIG. 8, after block 810, the process for generating a route using a customizable routing system illustrated in flow diagram 800 continues at block 802. In some embodiments, not shown in FIG. 8, the frequency table used at block 806 to generate a route is updated when, for example, road conditions change, or a route changes, or user preferences change, or due to some other changed conditions, as described herein. In such embodiments, a processor can perform updates to node probabilities and/or operations to update edge probabilities.

At block 812, a processor performs operations to set the next node as the current node (for example, to advance to the next node in the route). In some embodiments, after block 812, the process for generating a route using a customizable routing system illustrated in flow diagram 800 continues at block 806 to generate a route from the new current node to the destination.

In some embodiments, not shown in FIG. 8, a processor performs operations to update node probabilities (for example, probabilities of nodes and/or tiles) using a component such as a route update component 122, described herein at least in connection with FIG. 1. In some embodiments, also not shown in FIG. 8, a processor performs operations to update edge probabilities (for example, probabilities of edges between nodes and/or tiles) using a component such as a route update component 122, described herein at least in connection with FIG. 1. In some embodiments, a processor performs operations to update node probabilities and/or edge probabilities before, after, or concurrently with blocks 802-812.

In some embodiments, not shown in FIG. 8, steps of the process for generating a route using a customizable routing system illustrated in flow diagram 800 can be performed in a different order than is illustrated in FIG. 8. For example, in some embodiments block 802, can be performed after block 804. In some embodiments, also not shown in FIG. 8, steps of the process for generating a route using a customizable routing system illustrated in flow diagram 800 that do not rely on each other can be performed in parallel or concurrently. For example, in some embodiments, block 802 and/or block 804, can be performed concurrently with one or more of blocks 806-812.

**Other Embodiments**

In some embodiments, a computing system is provided, employing any components of the computerized (or computer, computing, or cloud) system of any of the embodiments described herein. The computing system comprises at least one computer processor, and computer memory having computer-readable instructions embodied thereon, that, when executed by the at least one computer processor, perform operations. The operations comprise accessing a representation of a road network. The representation is associated with a mapping computer platform. The representation comprises a plurality of nodes that includes at least one pair of nodes. Each pair of nodes of the representation has an edge connecting the nodes of the pair. The operations further comprise accessing a frequency-based lookup table. The frequency-based lookup table comprises a set of probabilities. Each probability of the set of probabilities is associated with a node. The set of probabilities includes a first probability. The first probability is associated with a first node. The first probability indicates a probability of determining a first route from the first node to a second node. The operations further comprise receiving a route request. The route request is a request to generate a road network route from a first location of the road network to a second location of the road network. The operations further comprise determining a first road network node of the representation of the road network. The first road network node is based, at least in part, on the route request. The operations further comprise generating the road network route from the first road network node to a second road network node. The road network route is based, at least in part, on the frequency-based lookup table. The operations further comprise causing presentation of the road network route. The road network route is presented at a map interface.

The map interface is associated with the mapping computer platform.

Advantageously, these and other embodiments, as described herein, have the technical effect of improving the flexibility, efficiency, and adaptability of customizable route generation. By performing customizable route generation using a probabilistic model based on historical route information (for example, routes previously recommended and/or taken), the flexibility of a mapping system is improved. As described herein, this probabilistic model is considerably more efficient than an exhaustive search, thereby reducing latency without sacrificing flexibility. As described herein, this probabilistic model and this reduced search space can more efficiently using computational resources, improving computational efficiency and optimizing the use of available computational resources. Additionally, by performing customizable route generation using a probabilistic model based on historical route information, the efficiency of a mapping system is improved. In some embodiments, using this probabilistic model that is based on the frequency of past routes considerably reduces the search space for customizable routing since an exhaustive search of the entire road network is not needed. This reduced search space reduces computational time and space requirements and more efficiently uses computing resources. As described herein, updating this probabilistic model (for example, when conditions change) is considerably faster since the update can be performed by updating the node and edge probabilities. Additionally, by performing customizable route generation using a probabilistic model based on historical route information, the adaptability of a mapping system is improved. In some embodiments, when a mapping service does not have information about a road or an intersection, the mapping service would not recommend that road or intersection and thus, would be even less likely to recommend that road or intersection in the future. However, techniques described herein interpolate information from known nodes and edges to unknown nodes and edges thereby causing missing or erroneous data in a probabilistic model to be added or updated.

In any combination of the above embodiments of the system, the operations further comprise generating the frequency-based lookup table. The frequency-based lookup table is generated by receiving historical route information. The historical route information comprises a past route recommended by the mapping platform. The past route includes a node. In any combination of the above embodiments of the system, the operations further comprise generating a frequency value for the past route. The frequency value for the past route is based, at least in part, on the historical route information. In any combination of the above embodiments of the system, the operations further comprise normalizing the frequency value. Normalizing the frequency value is to generate a probability for the node of the past route. In any combination of the above embodiments of the system, the operations further comprise storing the probability in the frequency-based lookup table.

In any combination of the above embodiments of the system, the operations further comprise determining one or more routes from the first network node to the second network node. In any combination of the above embodiments of the system, the operations further comprise determining a route to a third network node having the highest probability of reaching the second network node. The route to the third network node is determined from the one or more routes from the first network node to the second network node. The route to the third network node having the highest probability of reaching the second network node. The highest probability based, at least in part, on an entry of the frequency-based lookup table. In any combination of the above embodiments of the system, the operations further comprise generating the road network route from the first network node to the second network node using the route to the third network node.

In any combination of the above embodiments of the system, the operations further comprise generating the representation of the road network associated with the mapping computer platform, where each node of the representation corresponds to a location of the road network.

In any combination of the above embodiments of the system, each edge between each pair of nodes of the representation corresponds to a road between the locations associated with the pair of nodes.

In any combination of the above embodiments of the system, the operations further comprise generating a tiling of the road network. The tiling is based, at least in part, on the nodes and edges of the representation. A particular tile of the tiling of the road network includes a portion of the plurality of nodes of the representation.

In any combination of the above embodiments of the system, the first probability of the set of probabilities is associated with a first tile of the tiling of the road network. In any combination of the above embodiments of the system, the first probability indicates a probability a particular route from the first tile to a second tile of the tiling of the road network can be determined.

In any combination of the above embodiments of the system, a first tile of the tiling of the road network comprises the first road network node. In any combination of the above embodiments of the system, a second tile of the tiling of the road network comprises the second road network node. In any combination of the above embodiments of the system, the road network route is generated between the first tile of the tiling of the road network and the second tile of the tiling of the road network. In any combination of the above embodiments of the system, the road network route is generated based, at least in part, on the frequency-based lookup table.

In any combination of the above embodiments of the system, the first road network node is included in the particular tile, the second road network node is included in the particular tile, and the road network route is generated between the first network node and the second network node using an Astar pathfinding algorithm.

In any combination of the above embodiments of the system, the route request comprises a user preference for generating the road network route.

In any combination of the above embodiments of the system, the user preference for generating the route is used to generate a penalty function that is applied to the first probability when generating the road network route.

In any combination of the above embodiments of the system, the operations further comprise receiving an indication that a road condition of the road network has changed. In any combination of the above embodiments of the system, the operations further comprise updating the frequency-based lookup table based, at least in part, on the indication.

In some embodiments, a computer-implemented method is provided. The method comprises obtaining a representation of a road network. The representation of the road network is associated with a mapping computer platform. The representation comprises a plurality of nodes. The plurality of nodes including at least one pair of nodes. Each pair of nodes has an edge connecting the nodes of the pair. The method further comprises accessing a tiling of the representation of the road network. The tiling comprises a subdivision of a region containing the road network. The method further comprises accessing a frequency-based lookup table. The frequency-based lookup table comprises a set of probabilities. Each probability is associated with a node. The set of probabilities includes a first probability associated with a first node. The first probability indicates a probability of determining a road network route from the first node to a second node. The method further comprises receiving a route request to generate a road network route. The route request is a request to generate a road network route from a first location of the road network. The route request is a request to generate a road network route to a second location of the road network. The method further comprises generating the road network route from a first tile of the representation to a second tile of the representation where the first tile includes the first location of the road network and the second tile includes the second location of the road network. The road network route is generated based, at least in part, on the frequency-based lookup table. The method further comprises causing presentation of the road network route at a map interface. The map interface is associated with the mapping computer platform.

Advantageously, these and other embodiments, as described herein, have the technical effect of improving the flexibility, efficiency, and adaptability of customizable route generation. By performing customizable route generation using a probabilistic model based on historical route information (for example, routes previously recommended and/or taken), the flexibility of a mapping system is improved. As described herein, this probabilistic model is considerably more efficient than an exhaustive search, thereby reducing latency without sacrificing flexibility. As described herein, this probabilistic model and this reduced search space can more efficiently using computational resources, improving computational efficiency and optimizing the use of available computational resources. Additionally, by performing customizable route generation using a probabilistic model based on historical route information, the efficiency of a mapping system is improved. In some embodiments, using this probabilistic model that is based on the frequency of past routes considerably reduces the search space for customizable routing since an exhaustive search of the entire road network is not needed. This reduced search space reduces computational time and space requirements and more efficiently uses computing resources. As described herein, updating this probabilistic model (for example, when conditions change) is considerably faster since the update can be performed by updating the node and edge probabilities. Additionally, by performing customizable route generation using a probabilistic model based on historical route information, the adaptability of a mapping system is improved. In some embodiments, when a mapping service does not have information about a road or an intersection, the mapping service would not recommend that road or intersection and thus, would be even less likely to recommend that road or intersection in the future. However, techniques described herein interpolate information from known nodes and edges to unknown nodes and edges thereby causing missing or erroneous data in a probabilistic model to be added or updated.

In any combination of the above embodiments of the computer-implemented method, the method further comprises generating the frequency-based lookup table by receiving historical route information. The historical route information comprises a past route recommended by the mapping computer platform. The past route includes at least one node. In any combination of the above embodiments of the computer-implemented method, the method further comprises generating the frequency-based lookup table by generating a frequency value for the past route. The frequency value is based, at least in part, on the historical route information. In any combination of the above embodiments of the computer-implemented method, the method further comprises generating the frequency-based lookup table by normalizing the frequency value to generate a probability for the at least one node of the past route. In any combination of the above embodiments of the computer-implemented method, the method further comprises generating the frequency-based lookup table by storing the probability in the frequency-based lookup table.

In any combination of the above embodiments of the computer-implemented method, the method further comprises obtaining at least one probability from the frequency-based lookup table for a particular tile. The at least one probability is obtained from nodes included in tiles connected to the particular tile by at least one edge. In any combination of the above embodiments of the computer-implemented method, the method further comprises averaging the obtained at least one probability to generate an aggregated probability. In any combination of the above embodiments of the computer-implemented method, the method further comprises setting the probability associated with at least one node included in the particular tile to the aggregated probability.

In any combination of the above embodiments of the computer-implemented method, the method further comprises obtaining at least one probability from the frequency-based lookup table for a particular edge. The at least one probability is obtained from nodes connected using the particular edge. In any combination of the above embodiments of the computer-implemented method, the method further comprises averaging the obtained at least one probability to generate an aggregated probability. In any combination of the above embodiments of the computer-implemented method, the method further comprises setting the probability associated with at least one node connected using the particular edge to the aggregated probability.

In any combination of the above embodiments of the computer-implemented method, each tile of the tiling includes at least one node of the plurality of nodes.

In some embodiments, one or more computer storage media having computer-executable instructions embodied thereon that, when executed by one or more computer processors, cause the one or more computer processors to perform operations. The operations comprise obtaining a representation of a road network. The representation of the road network is associated with a mapping computer platform. The representation of the road network comprises a plurality of nodes. The plurality of nodes includes at least one pair of nodes. Each pair of nodes has an edge connecting the nodes of the pair. The operations further comprise accessing a tiling of a road network. The tiling comprises a subdivision of a region containing the road network. The operations further comprise, accessing a frequency-based lookup table. The frequency-based lookup table comprising a set of probabilities. Each probability associated with a node. The set of probabilities including a first probability associated with a first node. The first probability indicating a probability of determining a road network route from the first node to a second node. The operations further comprise, receiving a route request to generate a road network route from a first location of the road network to a second location of the road network. The operations further comprise, generating the road network route from a first tile of the representation to a second tile of the representation. The road network route based, at least in part, on the frequency-based lookup table. The first tile includes the first location of the road network. The second tile includes the second location of the road network. The operations further comprise, causing presentation of the road network route at a map interface. The map interface associated with the mapping computer platform.

Advantageously, these and other embodiments, as described herein, have the technical effect of improving the flexibility, efficiency, and adaptability of customizable route generation. By performing customizable route generation using a probabilistic model based on historical route information (for example, routes previously recommended and/or taken), the flexibility of a mapping system is improved. As described herein, this probabilistic model is considerably more efficient than an exhaustive search, thereby reducing latency without sacrificing flexibility. As described herein, this probabilistic model and this reduced search space can more efficiently using computational resources, improving computational efficiency and optimizing the use of available computational resources. Additionally, by performing customizable route generation using a probabilistic model based on historical route information, the efficiency of a mapping system is improved. In some embodiments, using this probabilistic model that is based on the frequency of past routes considerably reduces the search space for customizable routing since an exhaustive search of the entire road network is not needed. This reduced search space reduces computational time and space requirements and more efficiently uses computing resources. As described herein, updating this probabilistic model (for example, when conditions change) is considerably faster since the update can be performed by updating the node and edge probabilities. Additionally, by performing customizable route generation using a probabilistic model based on historical route information, the adaptability of a mapping system is improved. In some embodiments, when a mapping service does not have information about a road or an intersection, the mapping service would not recommend that road or intersection and thus, would be even less likely to recommend that road or intersection in the future. However, techniques described herein interpolate information from known nodes and edges to unknown nodes and edges thereby causing missing or erroneous data in a probabilistic model to be added or updated.

In any combination of the above embodiments of the one or more computer storage media, the operations further comprise generating a frequency-based lookup table by receiving historical route information. The historical route information comprises a past road network route recommended by the mapping platform. In any combination of the above embodiments of the one or more computer storage media, the operations further comprise generating a frequency-based lookup table by generating a frequency value for the past road network route based, at least in part, on the historical route information. In any combination of the above embodiments of the one or more computer storage media, the operations further comprise generating a frequency-based lookup table by normalizing the frequency value to generate a probability. In any combination of the above embodiments of the one or more computer storage media, the operations further comprise generating a frequency-based lookup table by storing the probability in the frequency-based lookup table.

In any combination of the above embodiments of the one or more computer storage media, the operations further comprise generating, for a particular tile of the representation, a sum of the frequencies of road network routes that end at the particular tile of the representation. In any combination of the above embodiments of the one or more computer storage media, the operations further comprise dividing a frequency value in the frequency value by the sum of the frequencies.

In any combination of the above embodiments of the one or more computer storage media, the operations further comprise determining a first road network route from the first tile of the representation to the second tile of the representation. In any combination of the above embodiments of the one or more computer storage media, the operations further comprise determining, from the first road network route, a second road network route to a third tile of the representation having the highest probability of reaching the second tile of the representation based, at least in part, on an entry of the frequency-based lookup table. In any combination of the above embodiments of the one or more computer storage media, the operations further comprise generating the road network route from the first tile of the representation to the second tile of the representation using the second road network route.

**Example Computing Environments**

FIG. 9 is a block diagram illustrating an example operating environment 900 suitable for implementing some embodiments of the disclosure. It should be understood that this and other arrangements described herein are set forth only as examples. Other arrangements and elements (for example, machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by an entity may be carried out by hardware, firmware, and/or software. For instance, some functions may be carried out by a processor executing instructions stored in memory.

Among other components not shown, example operating environment 900 includes a number of user devices, such as user devices 902a and 902b through 902n; a number of data sources (for example, databases or other data stores), such as data sources 904a and 904b through 904n; server 906; sensor 903; and network(s) 910. It should be understood that environment 900 shown in FIG. 9 is an example of one suitable operating environment. Each of the components shown in FIG. 9 may be implemented via any type of computing device, such as those described herein. These components may communicate with each other via network(s) 910, which may include, without limitation, a local area network (LAN) and/or a wide area networks (WAN). In some implementations, network(s) 910 comprises the Internet and/or a cellular network, amongst any of a variety of possible public and/or private networks.

It should be understood that any number of user devices, servers, and data sources may be employed within operating environment 900 within the scope of the present disclosure. Each may comprise a single device or multiple devices cooperating in a distributed environment. For instance, server 906 may be provided via multiple devices arranged in a distributed environment that collectively provide the functionality described herein. Additionally, other components not shown may also be included within the distributed environment.

User devices 902a and 902b through 902n can be client devices on the client-side of operating environment 900, while server 906 can be on the server-side of operating environment 900. Server 906 can comprise server-side software designed to work in conjunction with client-side software on user devices 902a and 902b through 902n so as to implement any combination of the features and functionalities discussed in the present disclosure. This division of operating environment 900 is provided to illustrate one example of a suitable environment, and there is no requirement for each implementation that any combination of server 906 and user devices 902a and 902b through 902n remain as separate entities. In some embodiments, the one or more servers806 represent one or more nodes in a cloud computing environment. Consistent with various embodiments, a cloud computing environment includes a network-based, distributed data processing system that provides one or more cloud computing services. Further, a cloud computing environment can include many computers, hundreds or thousands of them or more, disposed within one or more data centers and configured to share resources over the one or more network(s) 910.

In some embodiments, a user device 902a or server 906 alternatively or additionally comprises one or more web servers and/or application servers to facilitate delivering web or online content to browsers installed on a user device 902b. Often the content may include static content and dynamic content. When a client application, such as a web browser, requests a website or web application via a URL or search term, the browser typically contacts a web server to request static content or the basic components of a website or web application (for example, HTML pages, image files, video files, and the like). Application servers typically deliver any dynamic portions of web applications or business logic portions of web applications. Business logic can be described as functionality that manages communication between a user device and a data store (for example, a database). Such functionality can include business rules or workflows (for example, code that indicates conditional if/then statements, while statements, and the like to denote an order of processes).

User devices 902a and 902b through 902n may comprise any type of computing device capable of use by a user. For example, in one embodiment, user devices 902a through 902n may be the type of computing device described herein. By way of example and not limitation, a user device may be embodied as a personal computer (PC), a laptop computer, a mobile phone or mobile device, a smartphone, a tablet computer, a smart watch, a wearable computer, a personal digital assistant (PDA), a music player or an MP3 player, a global positioning system (GPS) or device, a video player, a handheld communications device, a gaming device or system, an entertainment system, a vehicle computer system, an embedded system controller, a camera, a remote control, a bar code scanner, a computerized measuring device, an appliance, a consumer electronic device, a workstation, or any combination of these delineated devices, or any other suitable computer device.

Data sources 904a and 904b through 904n may comprise data sources and/or data systems, which are configured to make data available to any of the various constituents of operating environment 900 or system 200 described in connection to FIG. 2. Examples of data source(s) 904a through 904n may be one or more of a database, a file, data structure, corpus, or other data store. Data sources 904a and 904b through 904n may be discrete from user devices 902a and 902b through 902n and server 906 or may be incorporated and/or integrated into at least one of those components. In one embodiment, data sources804a through804n comprise sensors (such as sensor 903), which may be integrated into or associated with the user device(s) 902a, 902b, or 902n or server806.

In some embodiments, operating environment 900 is utilized to implement one or more of the components of the system 100, described in FIG. 1, and/or the system 200, described in FIG. 2, including components to generate a customized route, as described herein. Operating environment 900 also can be utilized for implementing aspects of processes and/or any other functionality as described in connection with FIGS. 1-8.

FIG. 10 is a block diagram 1000 of an example computing device suitable for use in implementing some embodiments described herein With reference to FIG. 10, an exemplary computing device is provided and referred to generally as computing device 1000. The computing device 1000 is but one example of a suitable computing environment and is not intended to suggest any limitation as to the scope of use or functionality of embodiments of the disclosure. Neither should the computing device 100 be interpreted as having any dependency or requirement relating to any one or combination of components illustrated.

The computing device 1000 illustrated in FIG. 10 includes a bus 1010 that directly or indirectly couples the following devices: memory 1012, one or more processors 1014, one or more presentation components 1016, one or more input/output (I/O) ports 1018, one or more I/O components 1020, an illustrative power supply 1022, and a hardware accelerator 1026. Bus 1010 represents what may be one or more busses (such as an address bus, data bus, or combination thereof). Although the various blocks of FIG. 10 are shown with lines for the sake of clarity, in reality, these blocks represent logical, not necessarily actual, components. For example, a presentation component such as a display device may be considered to be an I/O component. In another example, processors have memory. It is recognized that such is the nature of the art and reiterate that the diagram of FIG. 10 is merely illustrative of an exemplary computing device that can be used in connection with one or more embodiments of the present disclosure. Distinction is not made between such categories as "workstation," "server," "laptop," "handheld device," or other computing device, as all are contemplated within the scope of FIG. 10 and with reference to "computing device."

Computing device 1000 typically includes a variety of computer-readable media. Computer-readable media can be any available media that can be accessed by computing device 1000 and includes both volatile and nonvolatile media, removable and non-removable media, and/or transitory and non-transitory media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 1000. Computer storage media does not comprise signals per se. Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 1012 includes computer storage media in the form of volatile and/or nonvolatile memory. The memory may be removable, non-removable, or a combination thereof. Exemplary hardware devices include solid-state memory, hard drives, optical-disc drives, or other hardware. Computing device 1000 includes one or more processors 1014 that read data from various entities such as memory 1012 or I/O components 1020. Presentation component(s) 1016 presents data indications to a user or other device. Exemplary presentation components include a display device, speaker, printing component, vibrating component, and the like.

The I/O ports 1018 allow computing device 1000 to be logically coupled to other devices, including I/O components 1020, some of which may be built in. Illustrative components include a microphone, joystick, game pad, satellite dish, scanner, printer, wireless device, and the like. The I/O components 1020 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 1000. The computing device 1000 may be equipped with depth cameras, such as stereoscopic camera systems, infrared camera systems, RGB camera systems, and combinations of these, for gesture detection and recognition. Additionally, the computing device 1000 may be equipped with accelerometers or gyroscopes that enable detection of motion. The output of the accelerometers or gyroscopes may be provided to the display of the computing device 1000 to render immersive augmented reality or virtual reality.

Some embodiments of computing device 1000 may include one or more radio(s) 24 (or similar wireless communication components). The radio 24 transmits and receives radio or wireless communications. The computing device 1000 may be a wireless terminal adapted to receive communications and media over various wireless networks. Computing device 1000 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi® connection to a device (for example, mobile hotspot) that provides access to a wireless communications network, such as a WLAN connection using the 802.11 protocol, a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

Hardware accelerator 1026 represents any suitable hardware component (for example, GPU) that offloads one or more tasks (for example, from a CPU) to accelerate or speed up the task. In some embodiments, the hardware accelerator 1026 represents a Graphics Processing Unit (GPU), field programmable gate arrays (FPGA), application-specific integrated circuits (ASIC), a Tensor Processing Unit (TPU), a sound card, or any suitable hardware component.

**Additional Structural and Functional Features of Embodiments of Technical Solution**

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (for example, machines, interfaces, functions, orders, and groupings of functions, and the like.) can be used in addition to or instead of those shown.

Embodiments of the present disclosure have been described with the intent to be illustrative rather than restrictive. Embodiments described in the paragraphs above may be combined with one or more of the specifically described alternatives. In particular, an embodiment that is claimed may contain a reference, in the alternative, to more than one other embodiment. The embodiment that is claimed may specify a further limitation of the subject matter claimed. Alternative embodiments will become apparent to readers of this disclosure after and because of reading it. Alternative means of implementing the aforementioned can be completed without departing from the scope of the claims below. Certain features and subcombinations are of utility and may be employed without reference to other features and subcombinations and are contemplated within the scope of the claims.

For purposes of this disclosure, the word "including" has the same broad meaning as the word "comprising," and the word "accessing" comprises "receiving," "referencing," or "retrieving." Furthermore, the word "communicating" has the same broad meaning as the word "receiving" or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

As used herein, the terms "application" or "app" may be employed interchangeably to refer to any software-based program, package, or product that is executable via one or more (physical or virtual) computing machines or devices. An application may be any set of software products that, when executed, provide an end user one or more computational and/or data services. In some embodiments, an application may refer to a set of applications that may be executed together to provide the one or more computational and/or data services. The applications included in a set of applications may be executed serially, in parallel, or any combination thereof. The execution of multiple applications (comprising a single application) may be interleaved. For example, an application may include a first application and a second application. An execution of the application may include the serial execution of the first and second application or a parallel execution of the first and second applications. In other embodiments, the execution of the first and second application may be interleaved.

As used herein, the term "set" may be employed to refer to an ordered (i.e., sequential) or an unordered (i.e., non-sequential) collection of objects (or elements), such as but not limited to data elements (for example, events, clusters of events, and the like). A set may include N elements, where N is any non-negative integer. That is, a set may include 1, 2, 3,... N objects and/or elements, where N is an positive integer with no upper bound. Therefore, as used herein, a set may include only a single element. In other embodiments, a set may include a number of elements that is significantly greater than one, two, or three elements. As used herein, the term "subset," is a set that is included in another set. A subset may be, but is not required to be, a proper or strict subset of the other set that the subset is included in. That is, if set B is a subset of set A, then in some embodiments, set B is a proper or strict subset of set A. **In** other embodiments, set B is a subset of set A, but not a proper or a strict subset of set A.

**Claims**

1. A computer system, comprising:

   at least one processor; and
   computer memory having computer-readable instructions embodied thereon, that, when executed by the at least one processor, perform operations comprising:

      access a representation of a road network associated with a mapping computer platform, the representation comprising a plurality of nodes including at least one pair of nodes, each pair of nodes having an edge connecting the nodes of the pair;
      access a frequency-based lookup table that comprises a set of probabilities, each probability associated with a node, the set of probabilities including a first probability associated with a first node and indicating a probability of determining a first route from the first node to a second node;
      receive a route request to generate a road network route from a first location of the road network to a second location of the road network;
      determine a first road network node of the representation of the road network based, at least in part, on the route request;
      generate the road network route from the first road network node to a second road network node based, at least in part, on the frequency-based lookup table; and
      cause presentation of the road network route at a map interface associated with the mapping computer platform.

2. The system of claim 1, the operations further comprising generate the frequency-based lookup table by:

   receiving historical route information comprising a past route recommended by the mapping computer platform, the past route including at least one node;
   generating a frequency value for the past route based, at least in part, on the historical route information;
   normalizing the frequency value to generate a probability for the at least one node of the past route; and
   storing the probability in the frequency-based lookup table.

3. The system of claim 1, wherein the operations to generate the road network route from the first road network node to a second road network node comprise:

   determine one or more routes from the first road network node to the second road network node;
   determine, from the one or more routes from the first road network node to the second road network node, a route to a third road network node having a highest probability of reaching the second road network node based, at least in part, on an entry of the frequency-based lookup table; and
   generate the road network route from the first road network node to the second road network node using the route to the third road network node.

4. The system of claim 1, the operations further comprising:

generate the representation of the road network associated with the mapping computer platform, wherein each node of the representation corresponds to a location of the road network; and
optionally further wherein each edge between each pair of nodes of the representation corresponds to a road between the locations associated with the pair of nodes.

5. The system of claim 1, the operations further comprising: generate a tiling of the road network to subdivide a region containing the road network, the tiling based, at least in part, on the nodes and edges of the representation, wherein a particular tile of the tiling of the road network includes a portion of the plurality of nodes of the representation.

6. The system of claim 5, wherein:

the first probability of the set of probabilities is associated with a first tile of the tiling of the road network; and
the first probability indicates a probability a particular route from the first tile to a second tile of the tiling of the road network can be determined.

7. The system of claim 5, further arranged according to one or more of the following:

(i) wherein a first tile of the tiling of the road network comprises the first road network node, and a second tile of the tiling of the road network comprises the second road network node, and wherein the road network route is generated between the first tile of the tiling of the road network and the second tile of the tiling of the road network the generation based, at least in part, on the frequency-based lookup table;
(ii) wherein the first road network node is included in the particular tile and the second road network node is included in the particular tile, and wherein the road network route is generated between the first road network node and the second road network node using an Astar pathfinding algorithm.

8. The system of claim 1, wherein the route request comprises a user preference for generating the road network route, and optionally further wherein the user preference for generating the route is used to generate a penalty function that is applied to the first probability when generating the road network route.

9. The system of claim 1, wherein the operations further comprise:

receive an indication that a road condition of the road network has changed; and
update the frequency-based lookup table based, at least in part, on the indication.

10. A computer-implemented method, comprising:

obtaining a representation of a road network associated with a mapping computer platform, the representation comprising a plurality of nodes including at least one pair of nodes, each pair of nodes having an edge connecting the nodes of the pair;
accessing a tiling that comprises a subdivision of a region containing the road network ;
accessing a frequency-based lookup table that comprises a set of probabilities, each probability associated with a node, the set of probabilities including a first probability associated with a first node and indicating a probability of determining a road network route from the first node to a second node;
receiving a route request to generate a road network route from a first location of the road network to a second location of the road network;
generating, based, at least in part, on the frequency-based lookup table, the road network route from a first tile of the representation to a second tile of the representation, the first tile including the first location of the road network and the second tile including the second location of the road network; and
causing presentation of the road network route at a map interface associated with the mapping computer platform.

11. The computer-implemented method of claim 10, further comprising: generating the frequency-based lookup table by:

receiving historical route information comprising a past route recommended by the mapping computer platform, the past route including at least one node;
generating a frequency value for the past route based, at least in part, on the historical route information;

normalizing the frequency value to generate a probability for the at least one node of the past route; and storing the probability in the frequency-based lookup table.

12. The computer-implemented method of claim 10, further comprising:
for a particular tile, obtaining at least one probability from the frequency-based lookup table wherein the at least one probability is obtained from nodes included in tiles connected to the particular tile by at least one edge;

averaging the obtained at least one probability to generate an aggregated probability; and
setting the probability associated with at least one node included in the particular tile to the aggregated probability.

13. The computer-implemented method of claim 10, further comprising:

for a particular edge, obtaining at least one probability from the frequency-based lookup table wherein the at least one probability is obtained from nodes connected using the particular edge;
averaging the obtained at least one probability to generate an aggregated probability; and
setting the probability associated with at least one node connected using the particular edge to the aggregated probability.

14. Computer storage media having computer-executable instructions embodied thereon that, when executed, by one or more processors, cause the one or more processors to perform operations according to the computer implemented method of any one of claims 10 to 13.

15. The computer storage media of claim 14, wherein the operations are further provided according to one or more of the following:

(i) wherein the operations to normalize the frequency value to generate the probability comprise: generate, for a particular tile of the representation, a sum of frequencies of road network routes that end at the particular tile of the representation; and divide a frequency value in the frequency value by the sum of the frequencies;
(ii) wherein the operations to generate the road network route from the first tile of the representation to the second tile of the representation comprise:

determine a first road network route from the first tile of the representation to the second tile of the representation;
determine, from the first road network route, a second road network route to a third tile of the representation having a highest probability of reaching the second tile of the representation based, at least in part, on an entry of the frequency-based lookup table; and
generate the road network route from the first tile of the representation to the second tile of the representation using the second road network route.

FIG. 1

EP 4 729 888 A1

FIG. 2

ROAD NETWORK

300

FIG. 3

ROAD NETWORK WITH PROBABILITIES

400

$P(u_2 \mid s,d)$ — 412

$P((u_1,u_2) \mid u_1,s,d)$ — 410

$P((u_2,d) \mid u_2,s,d)$ — 414

$P(u_1 \mid s,d)$ — 408

$P((u_3,u_1) \mid u_3,s,d)$ — 406

$P(u_3 \mid s,d)$ — 404

$P((s,u_3) \mid s,s,d)$ — 402

Nodes: $s$, $u_1$, $u_2$, $u_3$, $u_4$, $u_5$, $u_8$, $u_{12}$, $d$

FIG. 4

FIG. 5

EP 4 729 888 A1

FIG. 6

700

```
┌─────────────────────────────────────┐
│         GENERATE TILING             │── 702
└─────────────────────────────────────┘
                  │
                  ▼
┌─────────────────────────────────────┐
│      COLLECT ROUTE INFORMATION      │── 704
└─────────────────────────────────────┘
                  │
                  ▼
┌─────────────────────────────────────┐
│   GENERATE FREQUENCY TABLE FROM ROUTE│
│            INFORMATION              │── 706
└─────────────────────────────────────┘
                  │
                  ▼
┌─────────────────────────────────────┐
│ FILL IN MISSING VALUES IN FREQUENCY TABLE│
│   USING MESSAGING AND AGGREGATION   │── 708
└─────────────────────────────────────┘
                  │
                  ▼
┌─────────────────────────────────────┐
│   USE FREQUENCY TABLE TO GENERATE A │
│          CUSTOMIZED ROUTE           │── 710
└─────────────────────────────────────┘
```

# FIG. 7

800

FIG. 8

EP 4 729 888 A1

FIG. 9

1000

MEMORY

1012

PROCESSOR(S)

1014

PRESENTATION
COMPONENT(S)

1016

RADIO(S)

1024

I/O PORT(S)

1018

I/O COMPONENTS

1020

POWER SUPPLY

1022

1010

FIG. 10

Europäisches
Patentamt
European
Patent Office
Office européen
des brevets

## EUROPEAN SEARCH REPORT

**Application Number**

EP 25 20 8966

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 608185 B2 (DENSO IT LAB INC) 15 October 2014 (2014-10-15) | 1,3-10, 12-15 | INV. G01C21/34 |
| Y | * paragraphs [0011] - [0022], [0038], [0042], [0056] - [0066]; figures 3,4 * ----- | 2,11 | |
| Y | US 2023/124127 A1 (HWANG JAEHO [KR] ET AL) 20 April 2023 (2023-04-20) * paragraphs [0017], [0217] * ----- | 2,11 | |

**TECHNICAL FIELDS SEARCHED (IPC)**

G01C
G08G

The present search report has been drawn up for all claims

| Place of search | Date of completion of the search | Examiner |
|---|---|---|
| The Hague | 25 February 2026 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8966

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2026

| Patent document cited in search report | | Publication date | Patent family member(s) | | Publication date |
|---|---|---|---|---|---|
| JP 5608185 | B2 | 15-10-2014 | CN | 102735239 A | 17-10-2012 |
| | | | JP | 5608185 B2 | 15-10-2014 |
| | | | JP | 2012215571 A | 08-11-2012 |
| US 2023124127 | A1 | 20-04-2023 | KR | 20220153030 A | 17-11-2022 |
| | | | US | 2023124127 A1 | 20-04-2023 |
| | | | WO | 2021182933 A1 | 16-09-2021 |

EPO FORM P0459

For more details about this annex : see Official Journal of the European Patent Office, No. 12/82